# EUROPEAN PATENT APPLICATION

(11) **EP 1 418 713 A1**
(43) Date of publication of application: **12.05.2004**
(21) Application number: 01956818.7
(22) Date of filing: 08.08.2001
(51) Int. Cl.: H04L 12/56

(54) **SERVER, MOBILE COMMUNICATION TERMINAL, RADIO DEVICE, COMMUNICATION METHOD FOR COMMUNICATION SYSTEM, AND COMMUNICATION SYSTEM**

(71) Applicant: FUJITSU LIMITED, Kawasaki-shi, Kanagawa 211-8588 (JP)
(72) Inventor: AKAMA, Katsuaki, FUJITSU LIMITED, Kawasaki-shi, Kanagawa 211-8588 (JP)
(74) Representative: HOFFMANN - EITLE
(86) International application number: PCT/JP2001/006825
(87) International publication number: WO 2003/015356

(57) **Abstract**

In a communication system, a server can transfer between a mobile communication network and a packet communication network with a terminal continuing a communication with the mobile communication network.

The server disposed in a packet network to repeat a packet between a first terminal and a second terminal comprises a session managing unit storing a first address of the first terminal assigned to a first session representing a connection status between the server of its own and the terminal and a second address of the first terminal assigned to a second session representing a connection status between the server of its own and the first terminal, a receiving unit receiving a packet containing user data from the second terminal, a switching unit switching from the first session of a packet having the first address as a destination and containing the user data to the second session of a packet having the second address as the destination and containing the user data on the basis of the addresses stored in the session managing unit, and a transmitting unit transmitting the packet using the second session switched by the switching unit.

## Description

### Technical Field

The present invention relates to a server, a mobile communication terminal, a radio apparatus, a communication method in a communication system and a communication system suitable for use in a communication system which can concurrently use different kinds of networks, that is, a mobile communication network and another network (for example, Internet communication network).

### Background Art

Since environments of mobile computing are prepared and the mobile communication network and IP (internet protocol) network (referred also as TCP/IP communication network or IP packet network) are both developed quickly, a mobile communication terminal can access to the IP network over the mobile communication network to get a service provided by the IP network. A terminal such as a personal computer (hereinafter abbreviated as a personal computer) connected to the IP network can transmit/receive an electronic mail and the like to/from a mobile communication terminal over the IP network and the mobile communication network. By connecting the both networks, various services are realized.

However, while the mobile communication terminal is accessing to the mobile communication network to get the service provided by the IP network over the mobile communication network, the mobile communication terminal cannot switch the network to be accessed from the mobile communication network to LAN (Local Area Network) and continue the TCP/IP communication.

Conversely, when the mobile communication terminal moves, for example, from the first floor of the company to the outside of the building while accessing to the LAN, the data communication path established between the mobile communication terminal and a server installed on the floor is disconnected. Accordingly, when the mobile communication terminal is in communication to receive an electronic mail, for example, the mobile communication terminal loses the communication data (for example, the electronic mail data). For this, the user (a subscriber or a person who operates the mobile communication terminal) has to dial once more (re-dial) to the mobile communication network to newly set a data communication channel via a base station, an exchanger, etc., and again communicate.

Consequently, while the user is communicating important data, the user is limited his/her movement in order to avoid disconnection of the packet session (referred as a communication session, occasionally; hereinafter abbreviated as a session, occasionally) for transmitting/receiving IP packets (IP datagram) , which spoils portability of the mobile communication terminal.

In the light of the above problem, an object of the present invention is to provide a server, a mobile communication terminal, a radio apparatus, a communication method in a communication system, and a communication system, by which a mobile communication terminal can transfer between the mobile communication network and the packet communication network with the mobile communication terminal continuing the communication.

### Disclosure of Invention

(1) A server according to this invention disposed in a packet network to repeat a packet between a first terminal and a second terminal comprises a session managing unit storing a first address of the first terminal assigned to a first session representing a connection status between the server of its own and the terminal and a second address of the first terminal assigned to a second session representing a connection status between the server of its own and the first terminal, a receiving unit receiving a packet containing user data from the second terminal, a switching unit switching f rom the first session of a packet having the first address as a destination and containing the user data to the second session of a packet having the second address as the destination and containing the user data on the basis of the addresses stored in the session managing unit, and a transmitting unit transmitting the packet using the second session switched by the switching unit.
   Accordingly, while carrying out a data communication in a mobile communication network or a packet network, the user can freely move between different kinds of networks with the communication being continued.
(2) A server according to this invention disposed in a packet network to repeat a packet between a first terminal and a second terminal comprises a session managing unit storing a first address of the first terminal assigned to a first session representing a connection status between the server of its own and the first terminal and a second address of the first terminal assigned to a second session representing a connection status between the server of its own and the first terminal, a receiving unit receiving a packet having the first address or the second address as a source address and containing user data from the first terminal in the first session or the second session, and a transmitting unit transmitting a packet containing the user data in the received packet and having an address of the server of its own as the source address to the second terminal in both the first session and the second session.
   Accordingly, the user can be handed over seamlessly, that is, without hindrance. Additionally, it is possible to reduce the resources of the networks, and decrease the connection charge.
(3) The first address may be either an address assigned by a mobile communication network or an address assigned by the IP network, and the second address may be the other address. Accordingly, data transmission/reception becomes possible without largely changing the existing installations.
(4) The first session may be either a session in which the first terminal communicates with the IP network over a mobile communication network or a session in which the first terminal directly accesses to the IP network to communicate with the same, and the second session may be the other session. Accordingly, synchronous sessions are set so that simultaneous data communications become possible.
(5) The switching unit may monitor a quality of a radio signal transmitted from the first terminal in the first session, and switch the first session or the second session on the basis of predetermined detection. Accordingly, packets obtained from different sessions can be appropriately transmitted and received.
(6) A mobile communication terminal according to this invention accessing to a mobile communication network connected to a packet network to be able to carry out a packet communication with a server in the packet network comprises an access obtaining unit directly accessing to the packet network, not over the mobile communication network, to obtain an access for a packet communication, a control unit controlling the address obtaining unit to obtain an address when a predetermined operation is performed on the mobile communication terminal or it is detected that a direct access to the packet network becomes possible during the packet communication with the server, and a switching unit switching the packet communication with the server to a packet communication by a direct access to the packet network using the address obtained by the address obtaining unit.
   Accordingly, it is possible to dynamically switch the data transmission path with a movement of the portable terminal. Additionally, each of establishment of multiple sessions, a synchronization registration and a data transmission session is registered, exchanged and switched, whereby the network environments can be dynamically changed.
(7) A mobile communication terminal according to this invention directly accessing to a packet network connected to a mobile communication terminal, not over the mobile communication network, to be able to carry out a packet communication with a server in the packet network comprises an address obtaining unit directly accessing to the mobile communication network to obtain an address for a packet communication, a control unit controlling the address obtaining unit to obtain an address when a predetermined operation is performed on the mobile communication terminal or it is detected that a direct access to the packet network becomes possible during the packet communication with the server, and a switching unit switching the packet communication with the server to a packet communication by a direct access to the mobile communication network using the address obtained by the address obtaining unit.
   Accordingly, even when the mobile communication terminal moves to a different kind of network during a data communication, seamless handover becomes possible so that the user can avoid a trouble.
(8) The control unit may notify the server of the obtained address before the switching. Accordingly, each of the mobile terminals can multiplex a plurality of sessions. Further, the portable terminal can transmit and receive data such as a short message, for example.
(9) The switching unit may switch according to an instruction from the server. Accordingly, synchronous sessions are set for data transmission/reception, and concurrent data communication becomes possible. Additionally, the amount of investment in the packet network can be small.
(10) The switching unit may stop to transmit a packet for the packet communication with the server according to a first instruction from the server, switch according to a second instruction after the first instruction, and start to transmit a packet. Accordingly, large capacity transmission becomes possible.
(11) A radio apparatus according to this invention disposed in a packet network to carry out a radio communication with a mobile communication terminal comprises a measuring means measuring a receive quality in the radio communication, and a transmitting unit transmitting a received packet from the mobile communication terminal, a measured receive quality or deterioration information generated on the basis of the receive quality to a server in the packet network which is in communication with the mobile communication terminal.
   Accordingly, an address is dynamically given to the mobile communication terminal so that the mobile communication terminal can be appropriately managed.
(12) A communication method in a communication system according to this invention comprising a server disposed in a packet network and a mobile communication terminal being able to access to both a mobile communication network connected to the packet network and the packet network, comprises the steps of sending a packet to be transmitted when the mobile communication terminal carries out a packet communication with another terminal via the server, and controlling a source address of the packet to the another terminal by the server so that the source address of the packet remains unchanged before and after a switching of the network to which the mobile communication terminal accesses.
   Accordingly, it is possible to improve the secrecy of data between the portable terminal and a communication destination terminal, transmit and receive a large capacity of data, and establish a plurality of different synchronous sessions coping with the communication. Additionally, it is possible to re-connect without re-dialing, so that the load of communication monitoring can be diminished.
(13) The communication method in a communication system according to this invention in claim 12 further comprises the steps of notifying of an address to be used in a network to be switched to from the mobile communication terminal when the network to which the mobile communication terminal accesses is switched, and switching a destination address of a packet from the another terminal to the notified address by the server when the network to which the mobile communication terminal accesses is switched.
   Accordingly, when the user accesses to the IP network, it is possible to decrease the number of resources of repeating networks transferring IP packet data, and shorten the delay time of the packet data.
(14) A communication method in a communication system according to this invention comprises a first session communication step at which a first terminal communicates with a first server in a packet network over a mobile communication network using a first session representing a connection status between the first terminal and the first server, a synchronous communication step at which the first server starts a synchronous communication with a second server in the packet network, a synchronization registration request transmission step at which the first terminal transmits a synchronization registration request using a packet communication set between the first terminal and the first server, a second session establishment step at which a second session representing a direct connection status between the first server having received the synchronization registration request and the first terminal is established, a handover step at which the first server having received the synchronization registration request hands over, a switching step at which the first terminal switches from the mobile communication network to the packet network, and a communication step at which the first terminal communicates with the second terminal over the switched packet network using the synchronous communication started at the switching step.
   Accordingly, two sessions are established between the mobile communication terminal and the home agent in the packet network so that the session used to transmit and receive packets between the home agent and the mobile communication terminal is switched.
(15) A communication system according to this invention comprises a packet network, a mobile communication network connected to the packet network, a server disposed in the packet network to repeat a packet between a first terminal and a second terminal; and the first terminal transmitting/receiving a packet to/from the server directly or over the mobile communication network, the server comprising a session managing unit storing a first address of the first terminal assigned to a first session representing a connection status between the server of its own and the first terminal and a second address of the first terminal assigned to a second session representing a connection status between the server of its own and the first terminal, a receiving unit receiving a packet containing user data from the second terminal, a switching unit switching from the first session of a packet having the first address as the destination and containing the user data to the second session of a packet having the second address as a destination and containing the user data on the basis of the addresses stored in the session managing unit and a transmitting unit transmitting the packet in the second session switched by the switching unit, the mobile communication terminal comprising a transmitting/receiving unit transmitting/receiving a packet to/from the server in the packet network directly or over the mobile communication network connected to the packet network, an address obtaining unit obtaining an address for a packet communication from the packet received by the transmitting/receiving unit, generating a packet having the obtained address and directly accessing to the packet network, an address managing unit storing the address for the packet communication obtained by the address obtaining unit, a control unit controlling the address obtaining unit to obtain the address for the packet communication when detecting a predetermined operation or a status in which a direct access to the packet network becomes possible during the packet communication with the server over the mobile communication network, and a switching unit switching from the packet communication with the server over the mobile communication network to a packet communication by a direct access to the server when the control unit detects, and inputting the address for a packet stored in the address managing unit to the address obtaining unit.
   Accordingly, it is possible to diminish the load on the server, effectively manage the network, and avoid the communication from being disconnected. Further, it is possible to initiate a number of users, and multiplex sessions.

### Brief Description of Drawings

FIG. 1 is a diagram showing a structure of a communication system according to a first embodiment of this invention;
FIG. 2 is a diagram for illustrating handover between different kinds of networks according to the first embodiment of this invention;
FIG. 3 is a diagram for illustrating another handover between different kinds of networks according to the first embodiment of this invention;
FIG. 4 is a schematic functional block diagram of a base station according to the first embodiment of this invention;
FIG. 5 is a schematic functional diagram of an access server according to the first embodiment of this invention;
FIG. 6 is a schematic functional diagram of a mobile communication terminal according to the first embodiment of this invention;
FIG. 7 is a schematic block diagram of a radio hub according to the first embodiment of this invention;
FIG. 8 is a schematic functional block diagram of a repeating server according to the first embodiment of this invention;
FIG. 9 is a diagram showing an example of an IP address management table according to the first embodiment of this invention;
FIG. 10 is a functional block diagram of a home agent according to the first embodiment of this invention;
FIG. 11 is a diagram showing an example of a SyncML table according to the first embodiment of this invention;
FIG. 12 is a diagram showing a sequence for illustrating SyncML synchronization restration;
FIG. 13 is a diagram showing a sequence for illustrating SyncML communication;
FIG. 14 is a diagram showing a sequence in which the mobile communication terminal 1 communicates with a communication destination terminal over an IP network;
FIG. 15 is a diagram showing an example of a session management table according to the first embodiment of this invention;
FIG. 16 is a diagram showing a sequence for illustrating a switching process from a first session to a second session;
FIG. 17 is a diagram showing a communication sequence over a mobile communication network according to the first embodiment of this invention;
FIG. 18 is a diagram showing a handover sequence from the mobile communication network to the IP network according to the first embodiment of this invention;
FIGS. 19(a) and 19(b) are diagrams for illustrating an effect provided when this invention is applied;
FIGS. 20(a) and 20(b) are diagrams for illustrating another effect provided when this invention is applied;
FIG. 21 is a schematic diagram showing a structure of an IP network according to a first modification of the first embodiment of this invention;
FIG. 22 is a schematic diagram showing a structure of an IP network according to a second modification of the first embodiment of this invention;
FIG. 23 is a diagram showing a structure of a communication system according to a second embodiment of this invention.

### Best Mode for Carrying Out the Invention

### (A) Description of First Embodiment of the Invention

### (A-1) Principle of the Invention

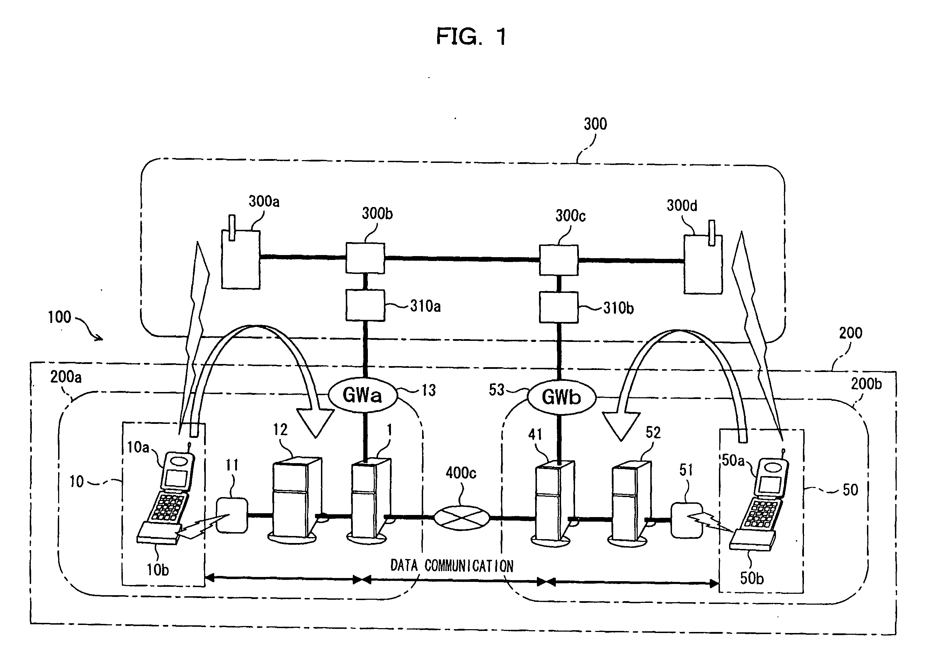

FIG. 1 is a diagram showing a structure of a communication system 100 according to a first embodiment of this invention. The communication system 100 shown in FIG. 1 comprises a mobile communication network 300 and an IP packet network (hereinafter referred as an IP network 200, occasionally) connected to each other.

The mobile communication network 300 is a network allowing accesses by radio in a wide range, such as a PDC (Personal Digital Cellular) system, a PHS (Personal Handy Phone System), a W-CDMA (Wideband-Code Division Multiple Access) system or the like. The mobile communication network 300 comprises base stations 300a and 300d as being apparatuses for radio communication, routing apparatuses 300b and 300c, and access servers 310a and 310b as being apparatuses for IP address assignment and protocol conversion.

The IP network 200 is a communication network using Internet protocol, and is a network being able to transmit/receive data by means of TPC/IP (Transport Control Protocol/Internet Protocol). The IP network 200 comprises, for example, IP packet networks (IP networks) 200a and 200b which are private IP networks, and an IP network 400c which is a public IP network.

The IP networks 200a and 200b comprise radio hubs (radio hub apparatuses) 11 and 51 as being apparatuses carrying out local radio communication, repeating servers 12 and 52 as being apparatuses assigning IP addresses and repeating IP packets, and home agent servers 1 (first server: hereinafter referred as a home agent, occasionally) and 41 (second server: hereinafter referred as a home agent, occasionally), respectively. Incidentally, all or a part of the IP networks 200a, 200b and 400c can be shared.

The home agents 1 and 41 are servers disposed in the IP networks 200a and 200b, respectively, to repeat IP packets between a movable communication terminal 10 and a mobile communication terminal 50.

Reference characters 10 and 50 denotes mobile communication terminals used in this communication system 100, each of which can communicate with the mobile communication network 300. The mobile communication terminal 10 carries out a packet communication (a communication using IP packets) via the home agent 1 and the radio hub 11 of the IP network 200a or over a mobile communication network connected to the IP network 200a. The mobile communication terminal 10 comprises a main body unit 10a having an accessing function to the mobile communication network 300 and a radio adapter 10b for connecting by radio to the radio hubs 11 and 51.

Whereby, each of the mobile communication terminals 10 and 50 can communicate with the mobile communication terminal 50 or 10 by both an access to the IP network 200 over the mobile communication network 300 and a direct access to the IP network 200. Each of the mobile communication terminals 10 and 50 can access to the IP network 200 while accessing to the mobile communication network 300. Conversely, each of the mobile communication terminals 10 and 50 can access to the mobile communication network 300 while accessing to the IP network 200. Additionally, a TCP/IP communication between the mobile communication terminals 10 and 50 is via led either the home agent 1 or 41.

Meanwhile, a party with which the mobile communication terminal 10 communicates may be a personal computer or the like connected to the IP network 200b in lieu of the mobile communication terminal (hereinafter referred as a communication destination terminal, occasionally) 50.

Hereinafter, description will be made of a communication method between the mobile communication terminals 10 and 50 using the communication system 100.

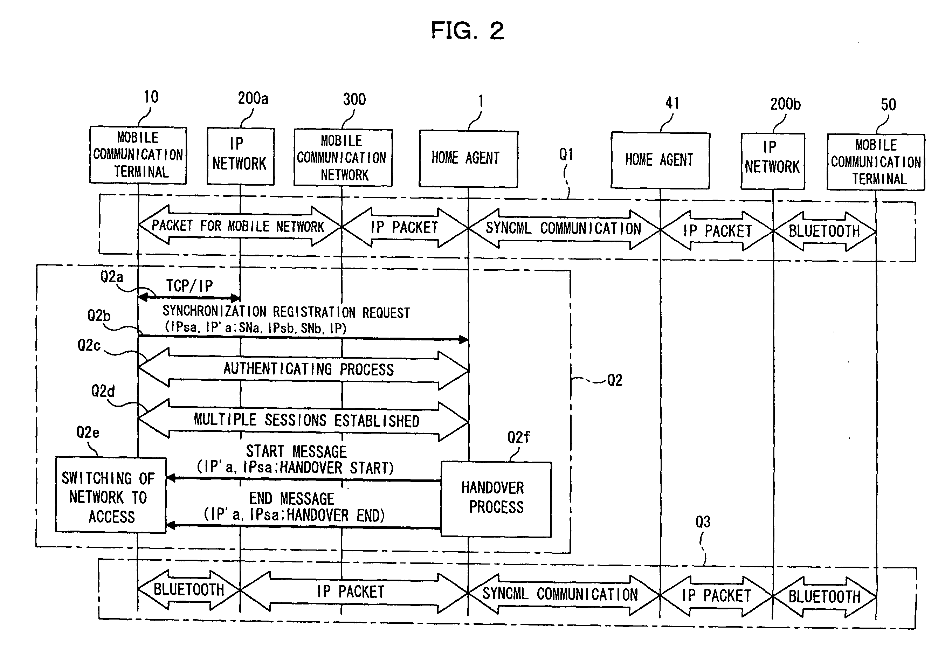

FIG. 2 is a diagram for illustrating handover between different types of networks (from the mobile communication network 300 to the IP network 200a) according to the first embodiment of this invention, where a session Q1, a session Q3 and a handover process Q2 for shifting from the session Q1 to the session Q3 are shown.

The session Q1 is a session in which the mobile communication terminal 10 communicates with the home agent 1 (the IP network 200a) over the mobile communication network 300. In the session Q1, the mobile communication terminal 10 first accesses to the mobile communication network 300. The mobile communication terminal 10 establishes a session with the mobile communication network 300 to transmit/receive IP packets for the mobile communication network (hereinafter referred as packets for mobile communication network, occasionally). The mobile communication network 300 transmits/receives IP packets to/from the home agent 1 of the IP network 200a. The home agent 1 communicates with the home agent 41 using SyncML protocol. The home agent 41 transmits/receives IP packets to/from the radio hub 51 (refer to FIG. 1) disposed in the IP network 200b. The radio hub 51 communicates with the mobile communication terminal 50 using a short distance radio communication protocol (Bluetooth protocol). Details of these protocols will be described later.

The session Q3 is a session in which the mobile communication terminal 10 directly accesses to the IP network 200a to communicate with the home agent 1. In this case, the mobile communication terminal 10 first accesses to the IP network 200a. The mobile communication terminal 10 communicates with the radio hub 11 (refer to FIG. 1) using Bluetooth protocol. The radio hub 11 transmits/receives IP packets to/from the home agent 1. The mobile communication terminal 10 communicates with the communication destination terminal 50, over a SyncML communication between the home agents 1 and 41, a packet communication between the home agents 41 and the IP network 200b and a Bluetooth communication between the IP network 200b and the mobile communication terminal 50.

In the handover process Q2, the mobile communication terminal 10 in communication in the session Q1 accesses to the IP network 200a to be given an IP address IP'a, whereby the mobile communication terminal 10 gets into a status (Q2a) in which the TCP/IP communication is possible. The mobile communication terminal 10 establishes a session with the home agent 1 directly from the IP network, and transmits a synchronization registration request message (referred also as a synchronization registration request signal or a synchronization registration request) to the home agent 1 using an IP packet in order to assign this session for handover (Q2b) .

In FIG. 2, IPsa and the like in parentheses of the synchronization registration request message (message Q2b) show elements of the IP packet. "IPsa" and "IP'a" before ";" are a header, showing the destination and the source of the IP packets in this order. "SNa," "IPsb," "SNb" and "IP" after ";" are contents contained in the data part (this notation being common to descriptions in parentheses in other drawings).

"IPsa" in the IP header is an IP address of the home agent 1. "IP'a" is an IP address assigned to the mobile communication terminal 10 for the session Q3. The IP address "IPsa" is identified by the IP networks 200a and 200b, and other IP networks. The IP address "IP'a" is identified by only the IP network 200a.

"SNa, " "IPsb, " "SNb" and "IP" in the data part represent terminal identification information on the mobile communication terminal 10, an IP address of the home agent 41 to which the communication destination terminal 50 registers synchronization, terminal identification information on the mobile communication terminal 50 and a session type, respectively. The session type is classified into "IP" and "mobile." "IP" represents that the mobile communication terminal 10 is directly connected to the IP network 200a (the home agent 1). "Mobile" represents that the mobile communication terminal 10 is connected to the home agent 1 over the mobile communication network 300. Incidentally, the terminal identification information "SNa" and "SNb" is beforehand stored in the home agents 1 and 41, and managed by the same.

When receiving the synchronization registration request message, the home agent 1 authenticates whether or not "SNa" contained in the message coincides with identification information stored therein (Q2c). When it is determined through the authentication that the mobile communication terminal 10 is a terminal qualified to get the service, a session for handover is established between the mobile communication terminal 10 and the home agent 1 (Q2d), the home agent 1 carries out a handover process (Q2f), and the network to which the mobile communication terminal 10 accesses is switched from the mobile communication network 300 to the IP network 200a in the mobile communication terminal 10 (Q2e).

More details of the processes Q2f and Q2e are as follows. In the process Q2f, the home agent 1 notifies a start of the handover process as a start message to the mobile communication terminal 10 over the IP network 200a or the mobile communication network 300, and notifies an end of the handover process as an end message to the mobile communication terminal 10 over the IP network 200a or the mobile communication network 300, as well.

When receiving the start message, the mobile communication terminal 10 stops the packet communication with the mobile communication terminal 50 over the mobile communication network 300, and prepares to switch it to the packet communication over the IP network 200a. When the mobile communication terminal 10 recognizes that preparation of the handover is completed in the home agent 1 by receiving the end message, the mobile communication terminal 10 resumes packet transmission, which has been stopped, to the IP network 200a, whereby the switching is carried out.

As above, two sessions are established between the mobile communication terminal 10 and the home agent 1 in the IP network 200a, and the session for transmitting/receiving packets between the home agent 1 and the mobile communication terminal 10 is switched.

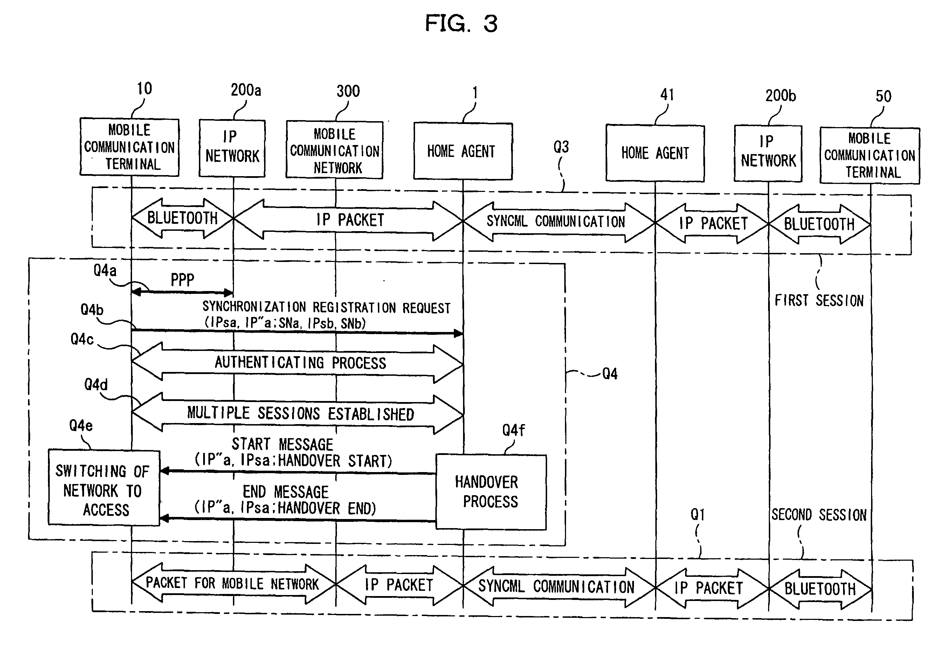

On the other hand, in handover between different types of networks, from the IP network 200a to the mobile communication network 300, there are carried out a session Q3, a handover process Q4, and a session Q1, as shown in FIG. 3.

In the handover process Q4, the mobile communication terminal 10 is connected by dialing up to the mobile communication network 300 using PPP (Point to Point Protocol) (Q4a), and is assigned an IP address "IP"a" by the access server 310a. The mobile communication terminal 10 transmits a synchronization registration request message containing "IP"a" to the home agent 1. After the home agent 1 authenticates the synchronization registration request message (Q4c), the second session in which the mobile communication network 300 to be accessed is established (Q4d), and a handover process (Q4f) in the home agent 1 and an access switching from the mobile communication network 300 to the IP network 200a in the mobile communication terminal 10 (Q4e) are carried out.

As above, the mobile communication terminal 10 can switch between two sessions with the home agent 1 at need.

The home agents 41 and 1, and the mobile communication terminals 50 and 10 may be connected over wires in spite of by radio. This method will be described later in a first modification of the first embodiment.

### (A-2) Detailed Structure of the Communication System of the Invention

Next, detailed description will be made of the mobile communication network 300, the mobile communication terminals 10 and 50, and the IP networks 200a, 200b and 400c for use to realize a communication method in the above communication system.

### (1) Mobile Communication Network 300

The mobile communication network 300 shown in FIG. 1 is connected to the IP networks 200a and 200b, and other subscriber fixed telephone network (not shown). The mobile communication network 300 comprises the base stations (BS) 300a and 300d, the exchangers (EX) 300b and 300c, and the access servers 310a and 310b.

The mobile communication network 300 may be provided with a plurality of base stations. In which case, the mobile communication network 300 is equipped with a base station control apparatus or the like for controlling assignment of channels to the plural base stations or anything.

### (1-1) Base Stations 300a and 300d, and Exchangers 300b and 300c

The base station 300a receives a radio signal [radio data: hereinafter referred as an RF (Radio Frequency) signal, occasionally] transmitted from the mobile communication terminal 10, demodulates the radio signal and transmits the demodulated data to the exchanger 300b, while modulating data transmitted from the exchanger 300b and transmitting an RF signal to the mobile communication terminal 10. The base station 300d is similar in function to the base station 300a, which transmits/receives data to/from the mobile communication terminal 50 and the exchanger 300c.

Each of the exchangers 300b and 300c is used as an apparatus having a function of routing IP packets for mobile communication network (hereinafter referred as packets for mobile communication network, occasionally) from the base stations 300a and 300d or other exchanger (not shown). Incidentally, "routing" signifies transferring of an IP packet to the most suitable router, server or the like according to the destination of the IP packet, which mainly stands for processing in the network layer. These exchangers 300b and 300c may be replaced with routers when the mobile communication network 300 additonally has the TCP/IP communication function.

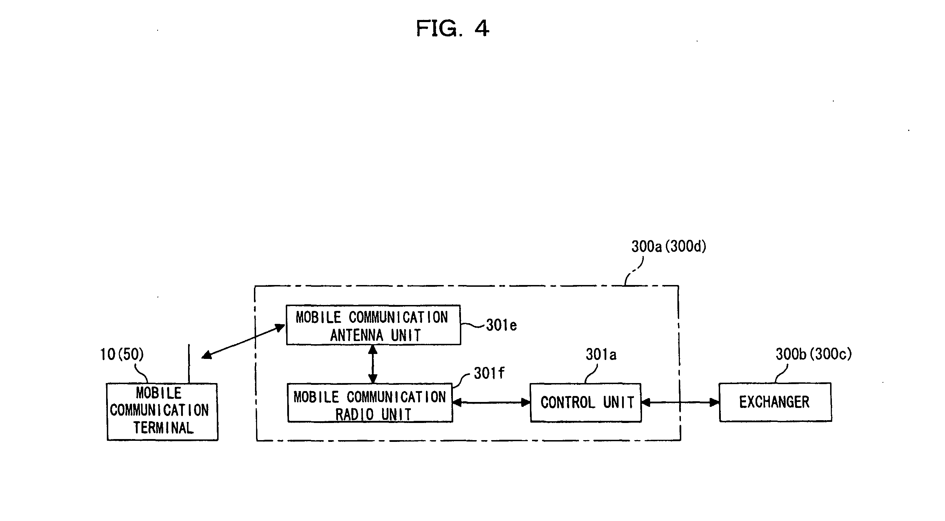

FIG. 4 is a schematic functional block diagram of the base station 300a according to the first embodiment of this invention. The base station 300a shown in FIG. 4 comprises a mobile communication antenna unit 301e, a mobile communication radio unit 301f and a control unit 301a.

The mobile communication antenna unit 301e is an antenna for transmitting/receiving RF signals. The mobile communication radio unit 301f carries out a transmitting/receiving process such as modulation/demodulation and the like of RF signals, including an RF circuit (not shown). The control unit 301a controls or anything a unit disposed in the base station 300 to convert the data format between the exchanger 300b and the mobile communication radio unit 301f.

The base station 300d is similar in structure to the base station 300a.

### (1-2) Access Servers 310a and 310b

The access server 310a converts a packet for mobile communication network transmitted in the mobile communication network 300 into an IP packet which can be transmitted in the IP network 200a, and transmits the IP packet to the IP network 200a, while converting an IP packet from the IP network 200a into a packet for mobile communication network and transmitting the packet to the exchanger 300b. Namely, the access server 310a has a function of converting the protocol from one to another between the mobile communication network 300 and the IP network 200a. Further, the access server 310a has a function of assigning an IP address to the mobile communication terminal 10 when receiving an IP address assignment request message from the mobile communication terminal 10, and transmitting the assigned IP address to the mobile communication terminal 10.

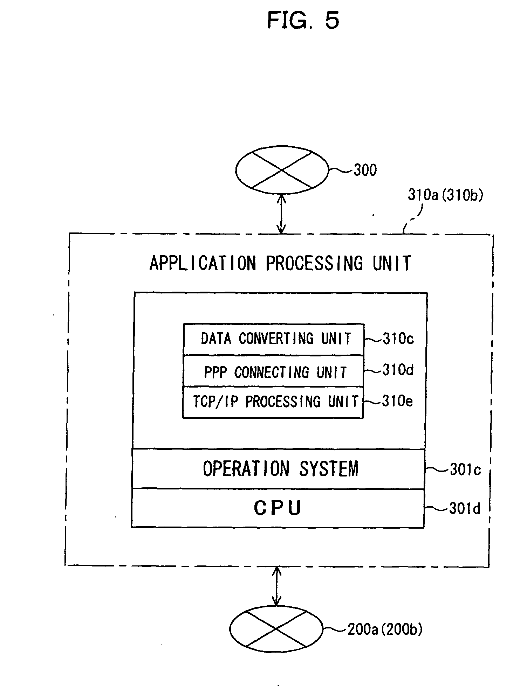

FIG. 5 is a schematic functional block diagram of the access server 310a according to the first embodiment of this invention. The access server 310a shown in FIG. 5 comprises a data converting unit 310c, a PPP connecting process unit (PPP connecting unit) 310d, a TCP/IP processing unit 310e, an operating system 301c and a CPU (Central Processing Unit) 301d. Incidentally, like reference characters in FIG. 5 designate like or corresponding part or like or corresponding functions, detailed descriptions of which are thus omitted.

The TCP/IP processing unit 310e carries out a TCP/IP process on an IP packet. The PPP connecting process unit 310d assigns an IP address to the mobile communication terminal 10 according to PPP by which the mobile communication terminal 10 is dial-up-connected. The data converting unit 310c converts an IP packet for mobile communication network outputted from the exchanger 300b into the TCP/IP format. The converted IP packet is transmitted from the TCP/IP processing unit 310e to the IP network 200a. On the other hand, an IP packet received by the TCP/IP processing unit 310e is converted into a packet for mobile communication network by the data converting unit 310c, and outputted to the exchanger 300b.

Accordingly, the communication system 100 can fuse the mobile communication network 300 and the IP network 200a to enable data communication with each other. The access server 310b is similar in structure to the access server 310a.

Whereby, a user A (a person who operates the mobile communication terminal 10) can access to the access server 310a via the base station 300a to communicate with the home agent 1. The user A can access to the access server 310b and another access server (not shown) via the access server 310a. A user B (a person who operates the mobile communication terminal 50) can be connected to a desired IP network via the access server 310b.

As above, the user A and the user B can carry out data communication via the access servers 310a and 310b, respectively.

### (2) Mobile Communication Terminals 10 and 50

An example of the mobile communication terminals 10 and 50 shown in FIG. 1 is a cellular phone which can access to the mobile communication network 300 and the IP network 200a to communicate, which comprises a cellular phone function unit 10a and a radio adapter 10b.

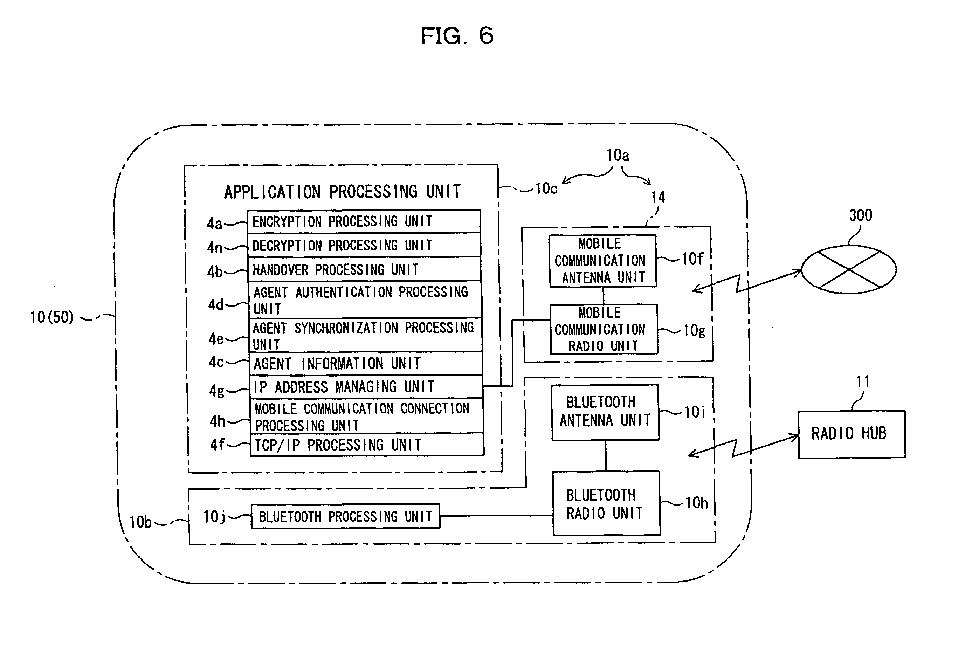

FIG. 6 is a schematic function block diagram of the mobile communication terminal 10 according to the first embodiment of this invention. The mobile communication terminal 10 shown in FIG. 6 comprises a fifth transmitting/receiving unit 14, a radio adapter 10b, and a terminal application processing unit 10c. The fifth transmitting/receiving unit 14 and the terminal application processing unit 10c correspond to the cellular phone function unit 10a shown in FIG. 1.

The radio adapter 10b and the fifth transmitting/receiving unit 14 to be described later cooperate with each other to function as the transmitting/receiving units 10b or 14 which transmits and receives a packet to/from the home agent 1 in the IP network 200a, directly or over the mobile communication network 300.

### (2-1) Fifth Transmitting/Receiving Unit 14

The fifth transmitting/receiving unit 14 has a function of accessing to the mobile communication network 300 to carry out data communication such as voice communication, packet communication and the like, for example. The fifth transmitting/receiving unit 14 comprises a mobile communication antenna unit 10f which transmits/receives an RF signal to/from the base station 300a, and a mobile communication radio unit 10g which carries out a transmitting/receiving process on an RF signal inputted/outputted from/to the mobile communication antenna unit 10f.

### (2-2) Radio Adapter 10b

The radio adapter unit 10b functions as a Bluetooth protocol processing unit for establishing a communication with a radio hub 11 in order to access to the IP network 200a.

The Bluetooth protocol is a short distance radio communication protocol, which enables a short distance communication within a range from about 10m (meters) to 100m. According to the protocol, a net called a piconet having one master machine and seven slave machines is configured. Namely, the radio hub 11 (refer to FIG. 1) functions as the master machine, while the radio adapter 10b functions as the slave machine.

The radio hub 11 can simultaneously transmit/receive data to/from a maximum of seven radio adapters 10b by time division multiplex access. Accordingly, the radio hub 11 can carry out a one-to-many communication in the IP network 200a.

The relation between the master machine and the slave machine may be converted. Namely, the radio adapter 10b may function as the master machine, whereas the radio hub 11 and radio adapters (not shown) of other mobile communication terminals may function as the slave machines.

The radio adapter 10b comprises, for example, a Bluetooth antenna unit 10i, a Bluetooth radio unit 10h and a Bluetooth processing unit (a short distance radio communication protocol processing unit) 10j. The Bluetooth antenna unit 10i is an antenna for transmitting/receiving an RF signal using Bluetooth protocol, which transmits an RF signal to the radio hub 11 and receives an RF signal from the radio hub 11. The Bluetooth radio unit 10h has a function for a receiving process on an RF signal received by the Bluetooth antenna unit 10i, and a function of converting a signal from the Bluetooth processing unit 10h into an RF signal and inputting the RF signal into the Bluetooth antenna unit 10i. The Bluetooth radio unit 10h includes an RF circuit. Whereby, an RF signal is transmitted and received using Bluetooth protocol between the mobile communication terminal 10 and the radio hub 11.

The Bluetooth processing unit 10j has a function of controlling the Bluetooth radio unit 10h to transmit/receive a control signal to/from the radio hub 11, and establishing a session according to the Bluetooth protocol with the radio hub 11. The Bluetooth processing unit 10j also has a function of, after the session is established, converting an IP packet from the terminal application processing unit 10c into data in a format according to the Bluetooth protocol, inputting the data into the Bluetooth radio unit 10h, while converting data from the Bluetooth radio unit 10h into IP packet data and inputting the data into the terminal application processing unit 10c. Each of these functions is accomplished by a CPU, a ROM (Read Only Memory) or a RAM, etc. of the portable terminal 10a.

The radio adapter 10b may be provided inside a casing of the mobile communication terminal 10. The functions of the radio adapter 10 may be integrated into the portable terminal 10a, or may be connected to the portable terminal 10a with a cable and a connecter (not shown) to be detachable from the mobile communication terminal 10a.

The mobile communication terminal 50 is similar in structure to the mobile communication terminal 10 shown in FIG. 6, further description of which is thus omitted.

### (2-3) Terminal Application Processing Unit 10c

The terminal application processing unit 10c comprises a packet communication encryption processing unit 4a, a decryption processing unit 4n, a TCP/IP processing unit (an address obtaining unit) 4f, a handover processing unit 4b, an agent authentication processing unit 4d, an agent synchronization processing unit (a control unit) 4e, an agent information unit 4c, an IP address managing unit (an address managing unit) 4g and a mobile communication connection processing unit 4h.

Next, description will be made of these processing units.

The encryption processing unit 4a encrypts data to be transmitted to a communication destination terminal (the mobile communication terminal) 50, a cellular phone, the home agent 41, a server, or the like) with key data, and outputs the data. The key data is "a common key" that is beforehand exchanged between the mobile communication terminals 10 and 50. The encryption processing unit 4a encrypts data to be transmitted to the communication destination terminal with the key data in a general encryption algorithm such as 3DES (Data Encryption Standard) , RC4 (Rivest Code #4) or the like. 3DES and RC4 are encryption algorithms called a symmetric system where an encrypting key and a decrypting key are identical, but the lengths of the encrypting keys are different.

The decryption processing unit 4n decrypts the received data with a common key, and outputs the decrypted data.

Use of the encryption processing unit 4a and the decryption processing unit 4n improves secrecy of data between the portable terminal 10a and the communication destination.

Next, description will be made of the handover processing unit 4b.

The handover processing unit 4b has a function of establishing two or more sessions in which user data can be transmitted and received (hereinafter referred as session processing establishing or multiple sessions establishing, occasionally) , and a function of switching sessions for user data transmission/reception.

First, the former multiple sessions establishing function will be described.

When the mobile communication terminal 10 accesses to either the mobile communication network 300 or the IP network 200a and transmits/receives user data to/from a terminal belonging to the IP network 200b via the home agent 1, the hand over processing unit 4b accesses to the other network according to an operation of an operating unit (not shown) of the mobile communication terminal 10 by the user, or preferably when detecting deterioration of the quality of a received signal (for example, a receiving level, presence/absence of reception, or something) from the base station 300a or the radio hub 11, and controls the IP address managing unit 4g to obtain a new IP address. The handover processing unit 4b establishes a new session using the new IP address with the home agent 1. The handover processing unit 4b controls the agent synchronization processing unit 4e to register this session with the home agent 1, thereby establishing multiple sessions. This function is a multiple sessions establishing function.

The above deterioration of the quality of the received signal is detected, for example, when the receiving level drops below a level beforehand set, or when the SN ratio drops below a value beforehand set (L2), or when the error rate drops below a level beforehand set, each of which hinders the communication.

The latter session switching function is a function of switching to a session to be used in order to transmit/receive user data. Namely, this is a function of switching a session having been used for transmission and reception of packets to a session newly added by the multiple session establishing function. The mobile communication terminal 10 can use any one of two or more different sessions established by this function.

When the session is switched, the handover processing unit 4b reads out an IP address to be used in the new session from the IP address managing unit 4g to be described later, and notifies the TCP/IP processing unit 4f of it. Whereby, the mobile communication terminal 10 can communicate in a switched session.

Next, description will be made of the agent authentication processing unit 4d.

The agent authentication processing unit 4d has a function of carrying out an authenticating process with the home agent 1 using an encryption algorithm. This authenticating process is a process of determining whether or not the mobile communication terminal 10 is a terminal which is qualified to get the service provided by the home agent 1. This authenticating procedure is beforehand determined between the mobile communication terminal 10 and the home agent 1, and the agent authentication processing unit 4d executes the authenticating procedure. In this authentication, hash algorithm corresponding to MD5 is used, for example.

Next, description will be made of the agent synchronization processing unit 4e.

The agent synchronization processing unit 4e has a synchronization registering function. This synchronization registering function is a function of notifying the home agent 1 managing the mobile communication terminal 10, from the mobile communication terminal 10 itself (hereinafter referred as own terminal, occasionally), of terminal identification information "SNa" on own terminal, terminal identification information "SNb" on a communication destination terminal (here, the mobile communication terminal 50), an IP address "IPsb" of the home agent 41 managing the communication destination terminal 50, and a type of the session "IP" or "mobile" (hereinafter an IP packet used for this notification being referred as a synchronization registration request message, occasionally).

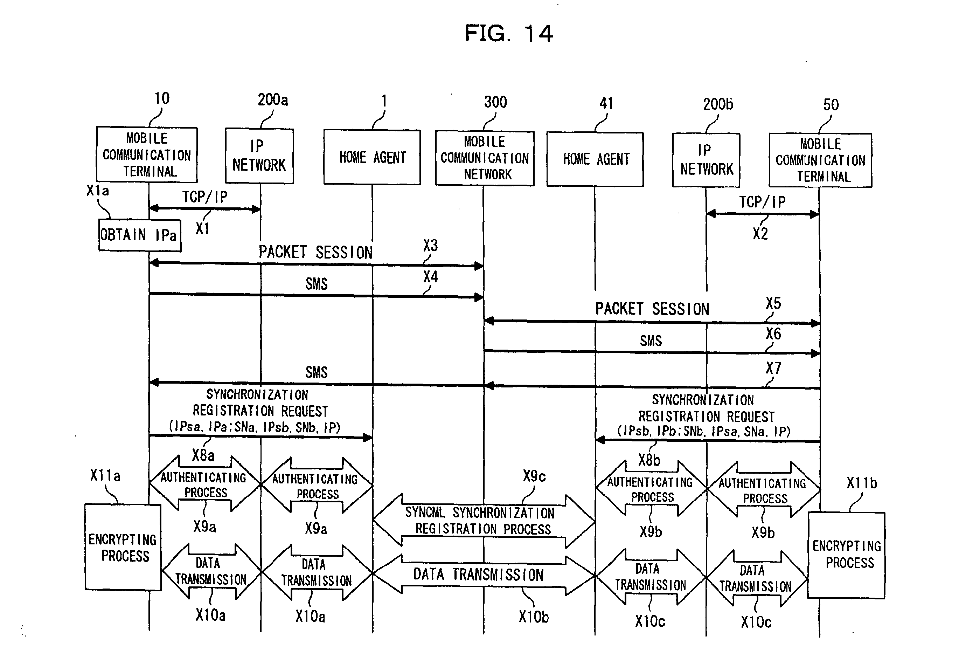

The agent synchronization processing unit 4e also has a function of adding, deleting or anything the synchronization registration other than the synchronization registration request. Whereby, the load of monitoring the communication on the home agent 1 is decreased. A sequence carried out by the agent synchronization processing unit 4e will be described later with reference to FIGS. 14 through 18.

Next, description will be made of the agent information unit 4c.

The agent information unit 4c has a function of controlling the radio adapter 10b or the fifth transmitting/receiving unit 14 when the mobile communication terminal 10 starts to communicate with another mobile communication terminal 50 to transmit the IP address "IPsa" of the home agent 1 and the terminal identification information "SNa" on the mobile communication terminal 10 to the mobile communication terminal 50 over the mobile communication network 300 or the IP network 200a. Additionally, the agent information unit 4c has a function of receiving the IP address "IPsb" of the home agent 41 and the terminal identification information "SNb" for identifying the mobile communication terminal 50 in the IP network 200b transmitted from the agent information unit 4c of the communication destination terminal 50, and storing them.

When the agent information unit 4c transmits "IPsa" and "SNa" over the mobile communication network 300, it is possible to transmit them to the destination communication terminal 50 by a short message (SMS: Short Message Service).

"IPsb" and "SNb" contained in the above synchronization registration notification message received by the agent information unit 4c may be stored, and read out to be used.

The agent authentication processing unit 4d, the agent synchronization processing unit 4e and the agent information unit 4c cooperate with each other to function as a data agent processing unit which communicates with both the mobile communication network 300 and the destination communication terminal 50 synchronized by the message. These functions are accomplished by that an IC (Integrated Circuit) or a CPU, a RAM, a ROM, etc. cooperate with each other.

Next, description will be made of the IP address managing unit 4g.

The IP address managing unit 4g generates an IP address assignment request message (an IP address assignment request signal) for requesting the repeating server 12 to assign an IP address, and an IP address assignment request message for requesting the access server 310a to assign an IP address. The IP address managing unit 4g controls the radio adapter 10b and the mobile communication connection processing unit 4h to transmit these IP address assignment request messages to the radio hub 11 and the base station 300a.

When receiving an IP address assigned by the repeating server 12 or the access server 310a, the IP address managing unit 4g stores the IP address. When the mobile communication terminal 10 carried out an IP-communication over the mobile communication network 300 or by directly accessing to the IP network 200a, the stored IP address is used.

Next, description will be made of the mobile communication connection processing unit 4h. The mobile communication connection processing unit 4h controls the fifth transmitting/receiving unit 14 (refer to 2-1) to transmit/receive an RF signal with the base station 310a disposed in the mobile communication network 300, thereby communicating with the destination communication terminal 50 over the base station 300a or a terminal in another network connected to the mobile communication network 300.

The TCP/IP processing unit 4f obtains an address assigned to its own terminal for packet communication from a packet received by the transmitting/receiving unit (10b, 14), generates a packet having the obtained address as a transmission address, and directly accesses to the IP network 200a (or the mobile communication network 300). In concrete, the TCP/IP processing unit 4f carries out a TCP/IP process to transmit/receive an IP packet, which generates an IP packet, and captures an IP packet addressed to its own terminal.

### (3) IP Networks 200a and 200b

Each of the IP networks 200a and 200b (refer to FIG. 1) is an IP network using a radio LAN, where a plurality of local networks of enterprise, school, local government and the like are connected. These IP networks 200a and 200b are connected to the IP network 400c, each of which comprises the radio hub 11 or 51, the repeating server 12, the agent server 1, and the gateway server (GW) 13 or 53.

### (3-1) Radio Hubs 11 and 51

Each of the radio hubs 11 and 51 locally transmits/receives data by radio to/from the mobile communication terminal 10 or 50, while transmitting/receiving an IP packet to/from the repeating server 12 or 52. Incidentally, the hub function is that one port (a physical port) outputs a received frame to another port, standing for transmission/reception of packets mainly in layer 2 or below.

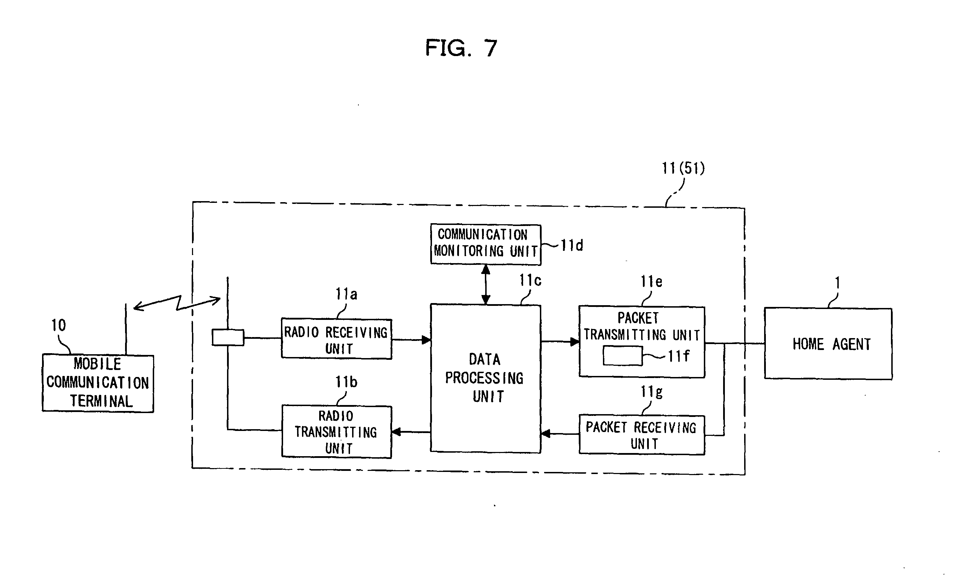

FIG. 7 is a schematic block diagram of the radio hub 11 according to the first embodiment of this invention. The radio hub 11 shown in FIG. 7 comprises a radio receiving unit 11a, a radio transmitting unit 11b, a data processing unit 11c, a communication monitoring unit 11d, a packet transmitting unit 11e and a packet receiving unit 11g. The radio receiving unit 11a receives an RF signal from the mobile communication terminal 10. The radio transmitting unit 11b transmits data from the home agent 1 to the mobile communication terminal 10. The data processing unit 11c processes an RF signal and data from the home agent 1. The communication monitoring unit 11d monitors the receiving quality of or the deterioration information on the RF signal. The packet transmitting unit 11e transmits data from the data processing unit 11c to the home agent 1, which comprises a quality information transmitting unit 11f which transmits the receiving quality or the deterioration information to the home agent 1 of the packet network 200a in communication with the mobile communication terminal 10.

Whereby, Bluetooth data of the mobile communication terminal 10 is demodulated by the radio receiving unit 11a, and the demodulated data is processed by the data processing unit 11c, while the receiving quality and the deterioration information are monitored by the communication monitoring unit 11d The receiving quality or the deterioration information and the processed data are converted into IP packets having an IP address by the packet transmitting unit 11e and transmitted to the home agent 1.

On the other hand, the packet receiving unit 11g extracts an IP address of an IP packet from the home agent 1. The data processing unit 11c retrieves terminal identification information SNa corresponding to the extracted IP address. The packet data is transmitted to the mobile communication terminal 10 through the radio transmitting unit 11b.

The radio hub 51 is similar to the radio hub 11, repetitive description of which is omitted here.

### (3-2) Repeating Servers 12 and 52

Each of the repeating server 12 and 52 has a function of repeating an IP packet between the radio hub 11 or 51 and the home agent 1 or 41, a function of assigning an IP address to the mobile communication terminal 10 or 50, and a function of responding to an inquiry for an IP address from the home agent 41 or the like.

First, the repeating function will be described. This repeating function is a function of controlling the transmitting/receiving unit 12a not to discard an IP packet when the IP packet received by the repeating server 12 or 52 is not addressed to the own repeating server 12 or 52 (hereinafter referred as own server, occasionally) but to transfer the IP packet to another LAN differing from a LAN from which the IP packet has been inputted. Owing to this function, each of the repeating servers 12 and 52 repeats an IP packet transmitted between the home agent 1 or 41 and the radio hub 11 or 51.

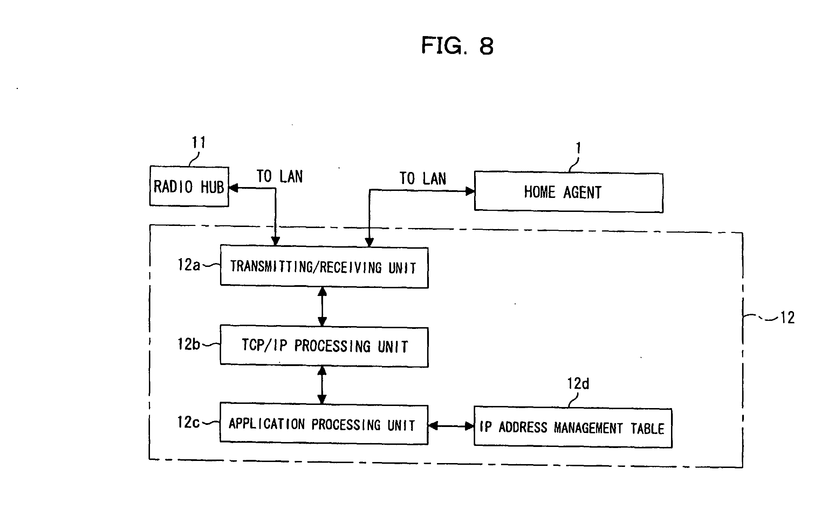

FIG. 8 is a schematic functional block diagram of the repeating server 12 according to the first embodiment of this invention. The repeating server shown in FIG. 8 comprises a transmitting/receiving unit 12a, a TCP/IP processing unit 12b, a repeating server application processing unit 12c and an IP address management table 12d. Incidentally, the repeating server 52 is similar in structure to the repeating server 12 shown in FIG. 8.

The transmitting/receiving unit 12a transmits/receives an IP packet, which has a port connected to a LAN connected to the radio hub 11 or 51, and a port connected to a LAN connected to the home agent 1. The transmitting/receiving unit 12a has a function of inputting an IP packet from a LAN cable to the TCP/IP processing 12b, while transmitting an IP packet from the TCP/IP processing unit 12b to the radio hub 11 or 51, or the home agent 1 or 41 through the LAN cable.

The TCP/IP processing unit 12b determines whether or not an IP packet from the transmitting/receiving unit 12a is addressed to its own server. When the IP packet is addressed to its own server, the TCP/IP processing unit 12b obtains the data, and inputs it to the repeating server application processing unit 12c. The TCP/IP processing unit 12b converts data from the repeating server application processing unit 12c into the IP packet format. The generated IP packet is transmitted to any LAN according to its destination address by the transmitting/receiving unit 12a.

When the IP packet from the transmitting/receiving unit 12a is not addressed to its own server, the TCP/IP processing unit 12b outputs the IP packet to the transmitting/receiving unit 12a so as to transmit the IP packet to a LAN differing from the LAN from which the IP packet has been inputted.

Next, description will be made of the function of assigning an IP address to the mobile communication terminal 10 or 50.

When the transmitting/receiving unit 12a receives an IP packet addressed to its own server (a temporary address being used as a source IP address), which is an IP address assignment request, the repeating server application processing unit 12c shown in FIG. 8 refers to the IP address management table 12d to assign an IP address to the terminal identification information MACa (for example, an MAC address). The repeating server application processing unit 12c thus functions as an assigning unit. Incidentally, it is possible to use an address in a higher layer instead of the terminal identification information MACa.

The IP address management table 12d relates an IP address to the order in which the IP address has been assigned for the terminal identification information SNa, and retains (stores) them. The IP address management table 12d is realized with a RAM (Random Access Memory), for example.

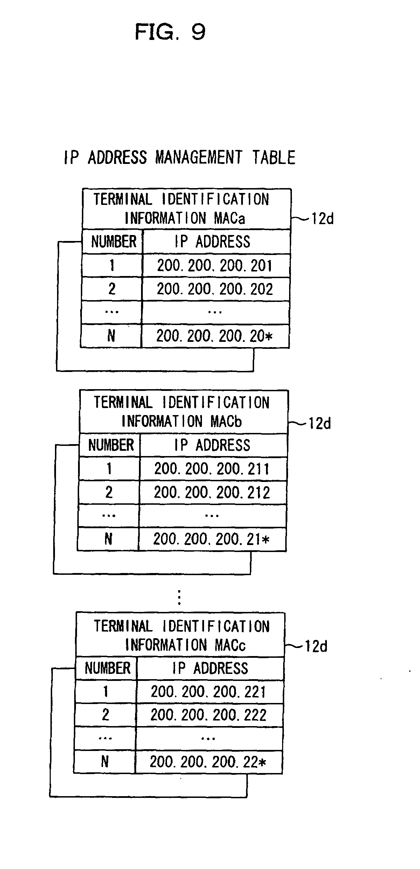

FIG. 9 is a diagram showing an example of the IP address management table 12d according to the first embodiment of this invention. "Number" shown in FIG. 9 is an identification number (N representing a natural number) given to the order of the IP address assigned to the mobile communication terminal 10 having the terminal identification information SNa by the repeating server 12. "IP address" is the assigned IP address. These numbers and IP addresses are managed for each piece of the terminal identification information MACa, MACb and MACc.

The repeating server 12 updates the information in the IP address management table 12d each time an IP address is assigned, and can cancel the assignment of the IP address. By the IP address assignment canceling function, contents of the IP address management table 12d are updated, as well.

The repeating server 12 can give a plurality of IP addresses to one SNa in response to a request from the mobile communication terminal 10, and appropriately manage them.

Meanwhile, the above responding function is realized with the IP address management table 12d like the canceling function.

### (3-3) Gateway Servers 13 and 53 (refer to FIG. 1)

Each of the gateway servers 13 and 53 is provided on, for example, a boundary between the IP network 200a or 200b and the mobile communication network 300, and has a function of allowing a specific IP packet having a specific IP address to pass between different types of networks (between the IP network and the mobile communication network). Whereby, the load on the home agents 1 and 41 can be decreased and the network can be effectively managed. The gateway server 13 may be provided in the mobile communication network 300.

### (3-4) Home Agents 1 and 41

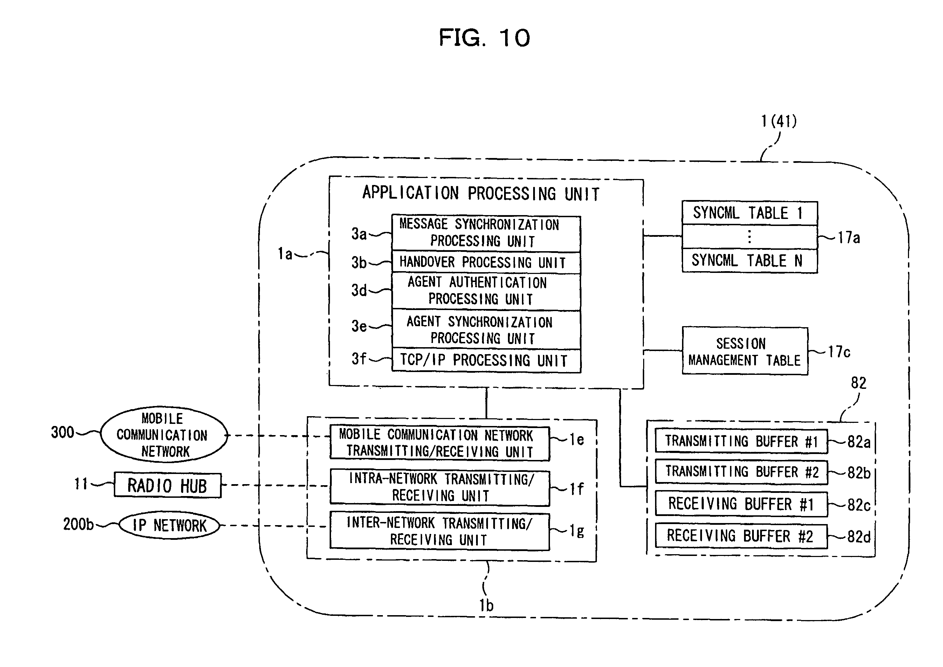

Each of the home agents 1 and 41 is connected to the mobile communication network 300 via the gateway server 13, connected to the radio hub 11 or 51 via the repeating server 12, and connected to the IP network 200b directly or over the IP network 400c, that is, connected in three directions. Next, the home agent 1 will be described with reference to FIG. 10. Incidentally, the home agent 41 is similar in structure to the home agent 1.

FIG. 10 is a schematic functional block diagram of the home agent 1 according to the first embodiment of this embodiment. The home agent 1 shown in FIG. 10 is provided in the IP network 200a. The home agent 1 comprises an agent server application processing unit (an application processing unit) 1a, a transmitting/receiving unit 1b, a transmission buffer (a transmitting/receiving buffer) 82 and a SyncML table 17a.

### (3-4-1) Transmitting/Receiving Unit 1b

The transmitting/receiving unit 1b receives a packet having a first address or a second address as the source address and containing user data in a first session or a second session from the mobile communication terminal 10. The transmitting/receiving unit 1b transmits a packet having an address of its own home agent 1 as the source address and containing user data in the received packet to the home agent 41.

The first address is either an address "IP'" assigned by the mobile communication network 300 or an address "IP"" assigned by the IP network 200a, whereas the second address is the other one.

The transmitting unit 1b comprises a mobile communication network transmitting/receiving unit 1e, an intra-network transmitting/receiving unit 1f and an inter-network transmitting/receiving unit 1g.
(i) The mobile communication network transmitting/receiving unit 1e transmits an IP packet to the gateway server 13 connected to the access server 310a provided in the mobile communication network 300 and receives an IP packet from the gateway server 13, thereby transmitting/receiving a packet to/from the mobile communication terminal 10 over the mobile communication network 300.
(ii) The intra-network transmitting/receiving unit 1f is a transmitting/receiving unit for carrying out a TCP/IP communication with the mobile communication terminal 10 via the repeating server 12 and the radio hub 11. Namely, the intra-network transmitting/receiving unit 1f has a function of transmitting an IP packet to the repeating server 12 and receiving an IP packet from the repeating server 12.
(iii) The inter-network transmitting/receiving unit 1g is a transmitting/receiving unit for transmitting an IP packet to the IP network 200b and receiving an IP packet from the IP network 200b. Namely, the inter-network transmitting/receiving unit 1g has a function of transmitting/receiving an IP packet to/from the home agent 41 over the IP network 400c.

In the transmitting/receiving unit 1b, the transmission buffer (the transmitting/receiving buffer) 82 storing transmitted/received data is provided, and each of the mobile communication network transmitting/receiving unit 1e, the intra-network transmitting/receiving unit 1f and the inter-network transmitting/receiving unit 1g reads out packets received over the mobile communication network 300 or the IP network 200b from the transmission buffer 82 in the order in which the packets have been received.

### (3-4-2) Transmission Buffer 82

The transmission buffer 82 has areas of transmitting buffers 82a and 82b holding data (IP packets to be transmitted) to be transmitted to the home agent 41 and areas of receiving buffers 82c and 82d holding received data (received IP packets) (hereinafter referred as transmission buffers 82a through 82d, occasionally). The transmitting buffers 82a and 82b are for the first and second sessions, respectively, whereas the receiving buffer 82c and 82d are for the first and second sessions, respectively. These transmission buffers 82a through 82d are realized with RAMs or the like.

The state of use and the like of the transmission buffers 82a through 82d is managed by the SyncML table 17a. Accordingly, when the buffers are assigned to the mobile communication terminal 10, a pair of the transmitting buffer and the receiving buffer is assigned for each session.

The above is a brief description of the transmission buffer 82.

Incidentally, assignment of the buffers to the mobile communication terminal 10 may be in a way that the buffers are assigned to each mobile communication terminal, not that a pair of the transmitting buffer and the receiving buffer are assigned to each session. For instance, as a method, the transmitting buffer (for example, a dual port RAM or the like) and the receiving buffer (for example, a dual port RAM or the like) may be assigned to the mobile communication terminal 10, and IP packets received from the mobile communication terminal 10 in the first and second sessions may be stored in the transmitting buffer, whereas IP packets received from the home agent 41 may be stored in the receiving buffer.

### (3-4-3) Application Processing Unit 1a

The application processing unit 1a controls the mobile communication network transmitting/receiving unit 1e, the intra-network transmitting/receiving unit 1f and the inter-network transmitting/receiving unit 1g, and manages and controls the transmission buffer 82. The application processing unit 1a comprises an agent authentication processing unit 3d, an agent synchronization processing unit 3e, a message synchronization processing unit 3a, a handover processing unit (a switching unit) 3b and a TCP/IP processing unit 3f.

Hereinafter, each of the units will be schematically described.

### (i) Agent Authentication Processing Unit 3d

The agent authentication processing unit 3d has a function of authenticating the mobile communication terminal 10 which has requested for authentication. Namely, the agent authentication processing unit 3d determines whether or not the mobile communication terminal is a terminal that is qualified to get the service according to an authentication procedure beforehand determined between the mobile communication terminal 10 and the home agent 1.

### (ii) Agent Synchronization Processing Unit 3e

The agent synchronization processing unit 3e has a function of receiving a synchronization registration (containing terminal identification information "SNa" on the mobile terminal 10, terminal identification information "SNb" on a communication destination of the mobile communication terminal 10 and an IP address "IPsb" of the home agent 41 to which the communication destination terminal applies for the synchronization registration), and preparing and updating a session management table 17c.

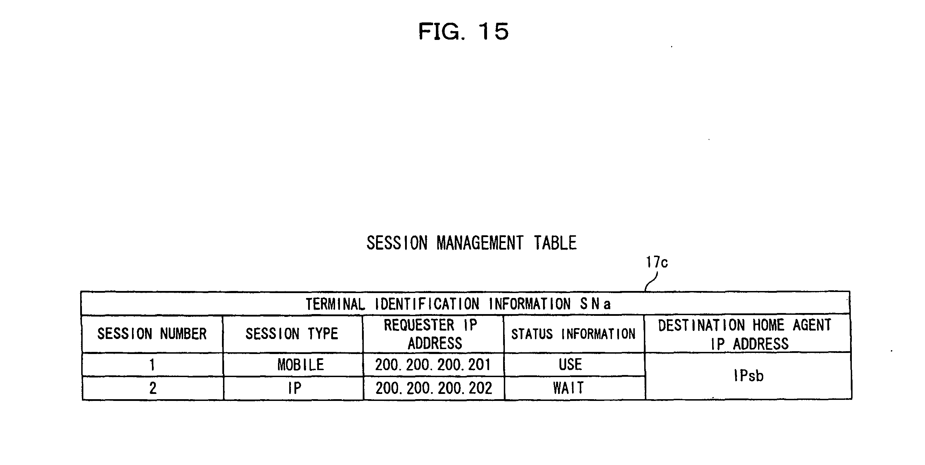

The session management table 17c will be now described with reference to FIG. 15. FIG. 15 is a diagram showing stored contents of the session management table 17c.

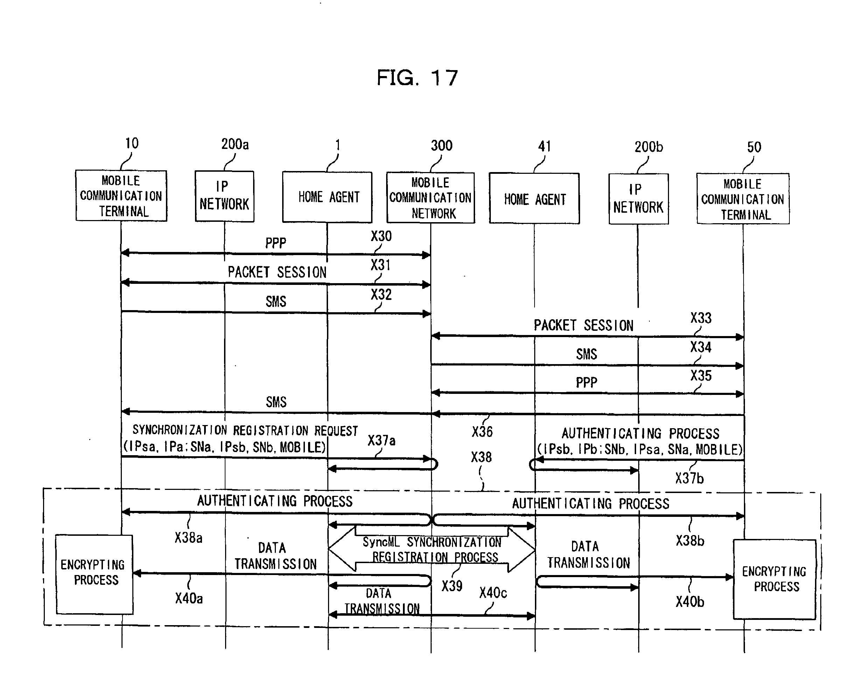

The session management table shown in FIG. 17c is managed for each piece of terminal identification information. In the session management table 17c, there are provided columns to store session number, session type, requester IP address, status information and destination home agent IP address.

The session number shows a session number incremented one by one each time the synchronization registration is applied. When it is the first synchronization registration, "1" is stored. When it is the next synchronization registration, "2" is stored.

The session type is information for identifying whether an access (IP) by the mobile communication terminal 10 is from the IP network or an access from the mobile communication network (mobile) in each session. Preferably, the synchronization registration from the mobile communication terminal 10 contains session type information. According to this information, it is preferably to store the session type in the session management table 17c. The home agent 1 refers to the session type to determine whether a communication with the mobile communication terminal 10 is to be carried out using the mobile communication network transmitting/receiving unit 1e or the intra-network transmitting/receiving unit 1f. When the session type is "mobile," a communication with the mobile communication terminal 10 is carried out using the mobile communication network transmitting/receiving unit 1e. When the session type is "IP," a communication with the mobile communication terminal 10 is carried out using the intra-network transmitting/receiving unit 1f. Even when the session type is not managed, it is possible to transmit the same IP packet from both the mobile communication network transmitting/receiving unit 1e and the intra-network transmitting/receiving unit 1f, and delete either one of the double received packets in the mobile communication terminal 10. When both of the mobile communication network transmitting/receiving unit 1e and the intra-network transmitting/receiving unit 1f transmit the same packets, a common number is given to the packets, whereby the mobile communication terminal 10 can detect the double received packets when the numbers coincide with each other.

The requester IP address is an IP address of the mobile communication terminal 10 which has applied for synchronization registration. The requester IP address is extracted from a source IP address in the header of an IP packet transmitted as the synchronization registration, and stored in the session management table 17c.

The status information is information indicating whether the session is used to transmit user data, or the session is not used and is made wait, for each session number. When the first synchronization registration is applied, the status information is the use status. When another synchronization registration is made to add a session, the status information is the wait status. A session in the wait status is changed to the use status when the handover process is carried out. A session in the use status at that time is changed to the wait status, or deleted. When a session is deleted, it is preferable that the transmitting buffer and the received buffer ensured for the session are released, and changed to a status in which the buffers can be assigned to another mobile communication terminal.

In the column of the destination home agent IP address, there is stored an IP address of a destination home agent contained in the data part of an IP packet for the synchronization registration. This IP address is used to set a destination IP address of an IP packet (for example, an IP packet or the like at the time of SyncML communication) to be transmitted from the home agent 1 to the home agent 41.

### (iii) Message Synchronization Processing Unit 3a

The message synchronization processing unit 3a synchronously exchanges data between the home agent 1 (its own server) and the home agent 41. Here, SyncML algorithm (hereinafter abbreviated as SyncML, occasionally) disclosed as the standard specification can be used as the algorithm used to synchronously exchange the data.

SyncML is one of the standards of data synchronous communications. Owing to it, the communication system 1 can transmit/receive data without a large change in existing installation.

For this purpose, the message synchronization processing unit 3a has the SyncML table 17a. The SyncML table 17a is a table used when SyncML communication is carried out to manage information about the retain status of IP packets retained in the transmission buffer 82.

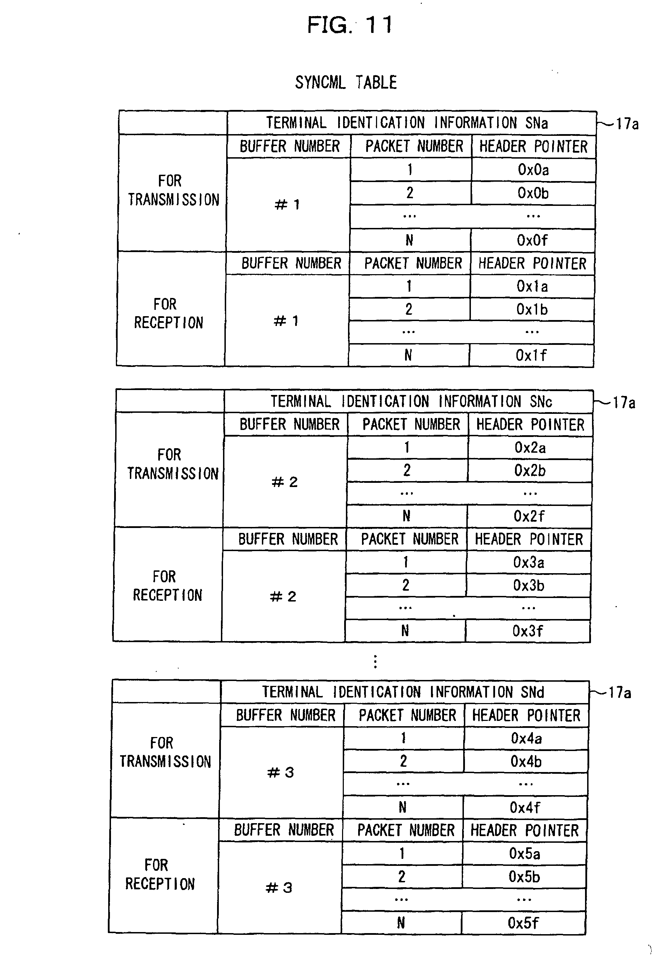

FIG. 11 is a diagram showing an example of the SyncML table 17a according to the first embodiment of this invention. The SyncML table 17a is provided for each piece of terminal identification information SNa-SNc. The SyncML table 17a retains and manages a buffer number for identifying each of the transmitting buffers and the receiving buffers, a packet number which is a serial number given to a packet retained in a transmitting buffer or receiving buffer, and a head pointer indicating the leading address of each packet retained in each of the transmitting buffers and the receiving buffers.

When the first packet (1) from the mobile communication terminal 10 having the terminal identification information SNa is retained in a transmitting buffer, "1" is stored as the packet number and the head pointer "0x0a" (Ox indicating a hexadecimal number) is held in a corresponding column for transmission in the table. When the next IP packet (2) from the mobile communication terminal 10 is retained in the transmitting buffer, "2" is stored as the packet number in a column below the packet number "1", and the leading address "0x0b" of the retained IP packet (2) is retained as the head pointer.

An IP packet received from the home agent 41 is retained in a receiving buffer. When the retained buffer is the first IP packet (1) , "1" is retained as the packet number and a head pointer "0x1a" is retained in a corresponding column for reception in the SyncML table 17a. When the next IP packet (2) from the home agent 41 is retained in the receiving buffer, a packet number "2" is retained, and the leading address "0x1b" of the retained IP packet (2) is retained as the pointer.

The SyncML table 17a is realized with a memory. In concrete, at the time of initialization carried out after the home agent 1 receives the synchronization registration request message to be described later, the home agent 1 secures a memory area for the mobile communication terminal 10, and the message synchronization processing unit 3a writes buffer numbers of a selected transmitting buffer and receiving buffer to be used for SyncML communication. It is desirable to initialize data of packet number, head pointer and the like at the time of this initialization.

Next, description will be made of SyncML communication using the transmission buffer 82.

First, SyncML synchronization registration will be first described because SyncML communication is carried out after SyncML synchronization registration is applied.

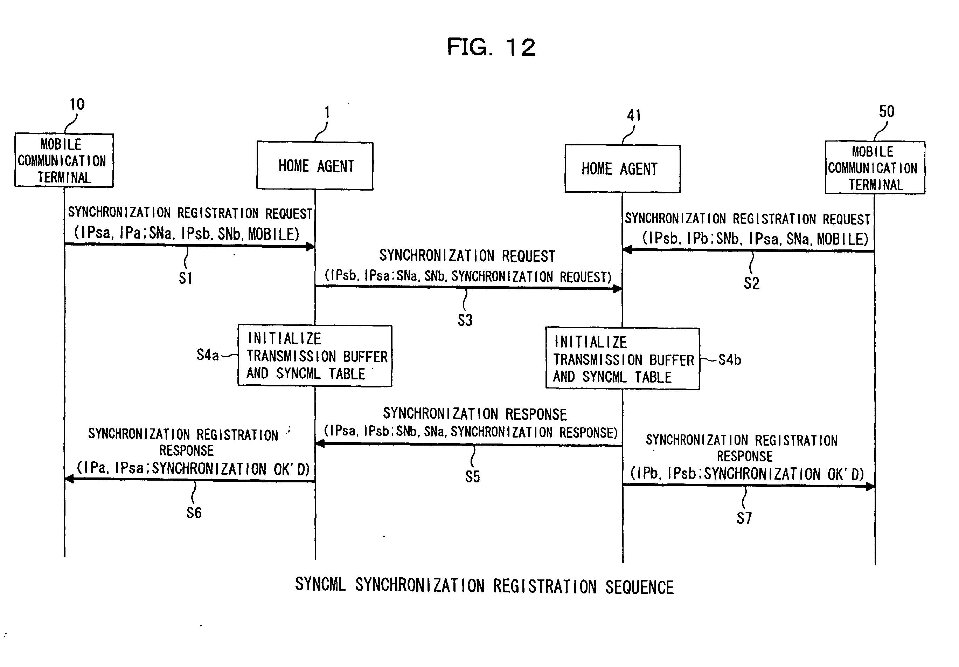

FIG. 12 is a diagram showing a sequence for illustrating SyncML synchronization registration. The mobile communication terminal 10 and the mobile communication terminal 50 shown in FIG. 12 transmit synchronization registration request messages to the home agent 1 and the home agent 41, respectively (messages S1 and S2). The home agent 1 transmits a synchronization request to the home agent 41 (message S3). Conversely, the home agent 41 may transmit a synchronization request to the home agent 1.

The home agent 1 then initializes the SyncML table 17a (refer to FIG. 10) (step S4a).

When receiving the synchronization request, the home agent 41 initializes the SyncML table 17a (step S4b), and transmits a synchronization response to the home agent 1 (message S5). The mobile communication terminal 10 and the mobile communication terminal 50 are notified that the synchronization registrations are accepted (messages S6 and S7).

Meanwhile, the synchronization request message shown in FIG. 12 is an IP packet. The destination of the header of this IP packet is an IP address "IPsb" of the home agent 41, the source of the same is an IP address "IPsa" of the home agent 1. The data part of the IP packet contains the terminal identification information "SNa" on the mobile communication terminal 10 indicating a requester for the synchronization registration, the terminal identification information "SNb" indicating a communication destination, and "synchronization registration" indicating contents of the message.

The synchronization response message is an IP packet in which the destination of the header is the IP address "IPsa" of the home agent 1, the source is the IP address "IPsb" of the home agent 41, and the data part contains the terminal identification information on the mobile communication terminal 10 indicating the source of the synchronization registration, the terminal identification information "SNa" indicating the communication destination, and "synchronization response" indicating contents of the message.

When receiving the synchronization request, the home agent 41 recognizes that both of the mobile communication terminals 10 and 50 make requests for SyncML communication on the basis of the contents of the synchronization registration request message from the mobile communication terminal 50 and the contents of the synchronization request from the home agent 1, and initializes the SyncML transmission table 17a and the transmission buffer 82. When the home agent 1 does not receive the synchronization response indicating that there is a synchronization registration request message from the mobile communication terminal 50 (for example, a timer detecting that a predetermined time has elapsed since transmission of the synchronization registration request message), the home agent 1 initializes the SyncML table 17a, and deletes an area of the SyncML table 17a initialized for the mobile communication terminal 10.

At steps S6 and S7, the synchronization registration response is an IP packet contains the IP address "IPa (IPb)" of the mobile communication terminal 10 (50) as the destination in the header, the IP address "IPsa (IPsb)" of the home agent 1 (41) as the source, and "synchronization registration OK" indicating that the synchronization registration is accepted in the data part.

When the SyncML synchronization registration is completed as above, data transmission/reception is carried out in SyncML communication. Next, description will be made of data transmission/reception in SyncML communication.

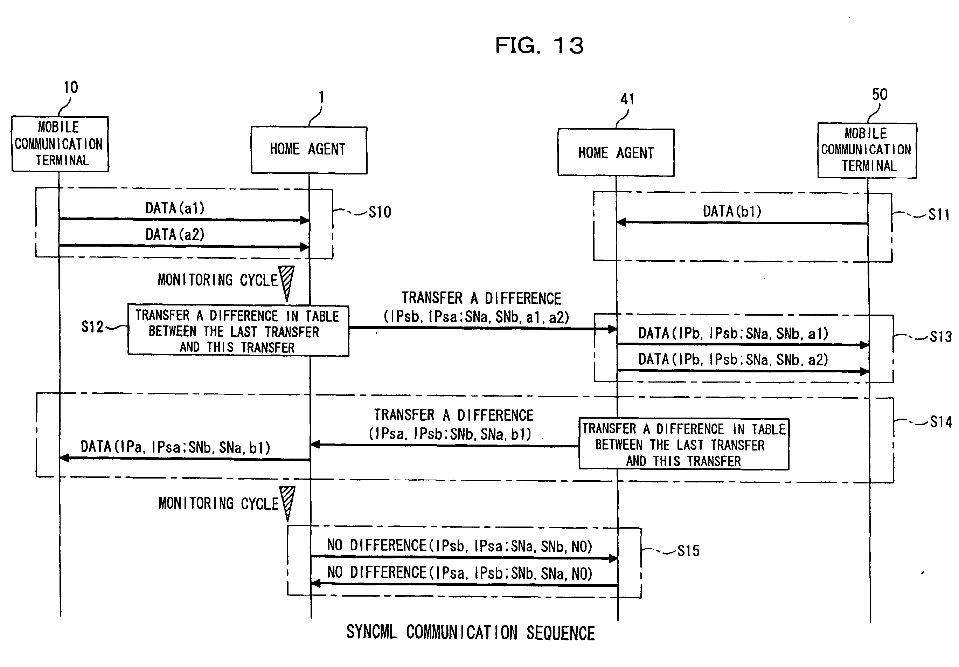

FIG. 13 is a diagram showing a sequence for illustrating SyncML communication. The mobile communication terminal 10 having received the synchronization registration response can recognize that the home agent 1 completes preparation for SyncML communication. The mobile communication terminal 10 transmits IP packets a1 and a2 in order to the home agent 1 at step S10. When the home agent 1 receives these IP packets, the message synchronization processing unit 3a retains the IP packets a1 and a2 in order in a transmitting buffer (assumed to be #1) secured (selected) for SyncML communication for the mobile communication terminal 10 at the time of initialization. Similarly, the message synchronization processing unit 3a stores "1" and "2" as corresponding packet numbers in a column for transmission of the terminal identification information SNa in the SyncML table 17a secured at the time of initialization, and stores leading addresses "0x0a" and "0x0b" of the retained IP packets in order in the column of the head pointer.

Similarly, the message synchronization processing unit 3a of the home agent 41 stores an IP packet b1 from the mobile communication terminal 50 in a transmitting buffer, and stores the packet number, head pointer and the like in a SyncML table 17a generated for the mobile communication terminal 50 (step S11).

The message synchronization processing unit 3a of the home agent 1 transmits a synchronization registration response although not shown, then monitors reception of a response signal by a timer. When a predetermined time has elapsed, the message synchronization processing unit 3a refers to the SyncML table 17a of the terminal identification information SNa, reads out the head ointers "0x0a" and "0x0b," reads out the IP packets a1 and a2 in order from the transmitting buffer, and fills both of the IP packets a1 and a2 into the data part of a new IP packet, and transmits the new IP packet to the home agent 41 (step S12).

As the destination address of the new IP packet, IPsb of a destination home agent of the terminal identification information SNa retained in the session management table 17c (refer to FIG. 10) is used, whereas as the source address, an IP address "IPa" of its own server is used, and the new IP packet is transmitted. Preferably, the new IP packet contains the terminal identification information "SNa" on the source and the terminal identification information "SNb" on the destination in order.

When detecting "SNb", the message synchronization processing unit 3a of the home agent 41 refers to the SyncML table 17a for SNb to specify the receiving buffer, and stores the received IP packets a1 and a2 in the specified receiving buffer. The message synchronization processing unit 3a updates the packet numbers and the head pointers in the SyncML table 17a for "SNb." Namely, the packet numbers "1" and "2" are stored in order, and the leading addresses of the stored IP packets are stored as the head pointers in order in the column for reception in the SyncML table for "SNb."

It is preferable to prepare a different SyncML table 17a for each communication destination, and update a SyncML table 17a corresponding to a received SNa.

When the updating is finished, the message synchronization processing unit 3a refers to the column for transmission in the SyncML table 17a, reads out the head pointer of the IP packet b1, designates an address indicated by the pointer, reads out the IP packet b1 from the transmitting buffer, fills the IP packet b1 into the data part of a new IP packet, and transmits the new IP packet to the home agent 1 (step S14). The destination address of the new IP packets is a destination home agent "IPsa" of the terminal identification information "SNb" retained in the session management table 17c. The source address is an IP address "IPb" of its own server. Preferably, the new IP packet contains the terminal identification information "SNb" on the source and the terminal identification information "SNa" on the destination in order.

When receiving the new IP packet, the message synchronization processing unit 3a of the home agent 1 stores the IP packet b1 in, for example, the receiving buffer #1, and stores a packet number "1" and a head pointer "0x1a" in a column for reception in the SyncML table 17a.

When a predetermined time has been further elapsed since the elapse of the last predetermined time, the message synchronization processing unit 3a again refers to the SyncML table 17a of "SNa" to determine presence/absence of an IP packet that has not yet been transmitted. Namely, the message synchronization processing unit 3a determines whether or not the transmitting buffer retains an IP packet from the mobile communication terminal 10, which is an IP packet other than the IP packet transmitted last time. When determining that there is no IP packet, the message synchronization processing 3a transmits an IP packet for notifying of "no difference" to the home agent 41 (step S15). Similarly, when determining that there is no IP packet to be transmitted, the home agent 41 transmits an IP packet for notifying of "no difference" to the home agent 1 (step S15).

The above is a brief description of SyncML communication.

Preferably, the SyncML table retains a completion flag (F) indicating completion of transmission correspondingly to a packet number in order to discriminate whether or not there is any IP packet not yet transmitted.

Whereby, it is possible to readily recognize that an IP packet corresponding to a packet number not given the transmission completion flag (F) is not yet transmitted.

Meanwhile, IP packets retained in the receiving buffers in each of the home agents 1 and 41 are transmitted to the mobile communication terminal 10 or 50 in the order in which the IP packets have been received in a session whose status information is "use." This status information can be obtained by referring to the session management table 17c by the application processing unit 1a. Here, destination IP addresses in the header part of the IP packets retained in the receiving buffers of the home agents 1 and 41 are the home agents 1 and 41, respectively. For this, when the IP packets are transmitted to the mobile communication terminals 10 and 50, the requester IP address whose status information in the session management table 17c is "use" is rewritten to a destination IP address.

### (iv) Next, description will be made of the handover processing unit 3b.

The handover processing unit 3b switches the first session to the second session on the basis of reception of a switch request from the mobile communication terminal 10 or the quality (communication status with the mobile communication terminal 10) of an RF signal transmitted from the mobile communication terminal 10 in the first session that is currently used to transmit/receive a packet. Namely, the handover processing unit 3b controls (carries out a handover processing) to switch between a session directly from the IP network 200a and a session over the mobile communication network 300 to one another.

Accordingly, the handover processing unit 3b has a communication monitoring function and a switching controlling function. Hereinafter, description will be made of the communication monitoring function and the switching controlling function in order.

### ① Communication Monitoring Function

The communication monitoring function is a function of monitoring received signals (IP packets) from the mobile communication terminal 10 by the handover processing unit 3b. When the mobile communication terminal 10 moves or anything while a session is established between the home agent 1 and the mobile communication terminal 10 and IP packets containing user data are transmitted and received, there is a case where the communication in this session becomes difficult. For instance, while the mobile communication terminal 10 accesses to the IP network 200a (the radio hub 11) to communicate with the home agent 1, there is a case where the mobile communication terminal 10 goes away from the radio hub 11 to the degree to which Bluetooth communication with the radio hub 11 is difficult.

Since the home agent 1 receives the IP packets from the mobile communication terminal 10 via the radio hub 11, the handover processing unit 3b detects that the quality of the packets drops below a quality L1 (the error rate M, the number of retransmission R) beforehand set. Similarly, the same is true for when the mobile communication terminal 10 accesses to the mobile communication network 300 to communicate with the home agent 1. In which case, the handover processing unit 3b detects that the quality of packets received via not the radio hub 11 but the base station 300a drops below the quality L1.

The detecting function described above is the communication monitoring function.

The communication monitoring function may detect the followings other than the above. For example, when the user of the mobile communication terminal 10 desires to switch the session, the user operates an operating unit (not shown) of the mobile communication terminal 10 so that the mobile communication terminal 10 transmits a session switch request signal (for example, an IP packet) in the session now in use, and the handover processing unit 3b detects reception of this session switch request signal.

The radio hub 11 or the base station 300a may be provided with a measuring function of measuring the receive quality (the receive level, the error rate) of RF signals, the radio hub 11 (the base station 300a) may add the measured receive quality or deterioration information (information indicating that the receive quality drops below a predetermined reference) to an IP packet to be transmitted to the home agent 1, and the home agent 1 may detect, from the added information, that the receive quality drops below the quality L1 (the receive level L, the error rate M).

The quality L1 represents the quality or the like in which a normal communication is impossible, a value of which can be set to any one of various values. Preferably, the mobile communication terminal 10 periodically transmits an IP packet for monitoring containing predetermined known data, and the home agent 1 uses the IP packet for monitoring to monitor the quality.

### ② Switching Controlling Function

The handover processing unit 3b starts a switching control as the handover processing, provided that the communication monitoring function detects. This switching control is a control to switch a session used between the mobile communication terminal 10 and the home agent 1. Namely, the home agent 1 switches from the mobile communication network transmitting/receiving unit 1e to the intra-network transmitting/receiving unit 1f, or switches from the intra-network transmitting/receiving unit 1f to the mobile communication network transmitting/receiving unit 1e for an IP packet to be transmitted to the mobile communication terminal 10 (or to be received from the mobile communication terminal 10). Since an IP address used by the mobile communication terminal 10 differs according to a session used at that time, the handover processing unit 3b of the home agent 1 refers to the session management table 17c (refer to FIG. 10) to read out a requester IP address corresponding to a session to be switched to, and generates an IP packet to be addressed to that IP address, or controls the TCP/IP processing unit 3f to capture an IP packet from that IP address. The handover processing unit 3b controls the transmission buffer 82, and controls transmission of a session switch instruction to the mobile communication terminal 10.

Whereby, the home agent 1 can detect movement of the mobile communication terminal 10 or deterioration of the quality, thereby to detect it as an opportunity to switch the session. Additionally, since the communication is not disconnected, seamless handover becomes possible.

(v) The TCP/IP processing unit 3f carries out a TCP/IP format processing. Namely, the TCP/IP processing unit 3f captures an IP packet received by the transmitting/receiving unit 1b when the IP packet is addressed to its own server, and inputs the data to an upper application or another processing unit. The TCP/IP processing unit 3f has a function of converting data outputted from the upper application (or another processing unit) to an IP packet having a destination and a source instructed from the upper application, and transmitting to the IP packet from any one of the mobile communication network transmitting/receiving unit 1e, the intra-network transmitting/receiving unit 1f and the inter-network transmitting/receiving unit 1g of the transmitting/receiving unit 1b.

### (A-3) Detailed Description of Communication Method in Communication System of the Invention

(1) Next, description will be made of handover from the IP network 200a to the mobile communication network 300 configured as above, according to the first embodiment of this invention with reference to FIGS. 14 and 15.

FIG. 14 is a diagram showing a sequence in which the mobile communication terminal 10 communicates with a communication destination terminal over the IP network 200a. First, a process denoted by X1 in FIG. 14 will be described. X1 is a process in which the mobile communication terminal 10 obtains an IP address "IPa" to be used by the mobile communication terminal 10 when accessing to the home agent 1 via the radio hub 11. The Bluetooth processing unit 10b of the mobile communication terminal 10 controls the Bluetooth radio unit 10h to communicate by radio with the radio hub 11 using the Bluetooth antenna unit 10i, and establishes a session in a local radio section. Here, the mobile communication terminal 10 is assumed to be in a range in which the mobile communication terminal 10 can communicate by radio with the radio hub 11.

The IP address managing unit 4g of the mobile communication terminal 10 controls the TCP/IP processing unit 4f so as to generate an IP packet having a temporary address as the source addressed to an IP address "IPtsa" of the repeating server 12. This IP packet contains the terminal identification information "SNa" on the mobile communication terminal 10 and data indicating an assign request in the data part, which is also called an IP address assign request message.

The IP packet generated by the TCP/IP processing unit 4f is transmitted to the radio hub 11 through the Bluetooth processing unit 10b, the Bluetooth radio unit 10h and the Bluetooth antenna unit 10i.

When receiving the IP packet, the radio hub 11 transmits the IP packet to the repeating server 12. When the transmitting/receiving unit 12a of the repeating server 12 receives the IP address assign request message, the TCP/IP processing unit 12b recognizes that the packet is addressed to its own server (the destination being "IPtsa"), and inputs the IP address assign request message to the repeating server application processing unit 12c. The repeating server application processing unit 12c selects an assignable IP address, and stores an IP address ("IPa" here) corresponding to terminal identification information MACa retained in the IP address management table 12d. The repeating server application processing unit 12c controls the TCP/IP processing unit 12b and the transmitting/receiving unit 12a to transmit an IP packet addressed to the temporary address containing the selected IP address in the data part to the radio hub 11.

When receiving the IP packet, the radio hub 11 transmits an RF signal to the mobile communication terminal 10 according to Bluetooth protocol in a similar manner. The radio adapter 10b of the mobile communication terminal 10 receives the RF signal, and inputs it to the TCP/IP processing unit 4f. The TCP/IP processing unit 4f recognizes that this packet is addressed to its own terminal (the temporary address), and inputs the assigned IP address "IPa" contained in the IP packet to the IP address managing unit 4g. The IP address managing unit 4g stores the assigned IP address "IPa."

Preferably, an IP network corresponding to "IPa" to which the mobile communication terminal 10 has accessed to obtain this IP address is stored as the session type.

Whereby, a packet session is established. When the mobile communication terminal 10 accesses to the home agent 1 via the radio hub 11, TCP/IP communication using the assigned IP address is possible. The above process corresponds to X1 shown in FIG. 14.

Similarly, the mobile communication terminal 50 is assigned an IP address, and carries out a process X2 (similar to X1) indicated by TCP/IP.

The mobile communication connection processing unit 4h of the mobile communication terminal 10 assigned the IP address transmits a packet session establish request signal to the mobile communication network 300 under a control of the agent information unit 4c. The mobile communication network 300 having received this transmits a packet session establish response signal to the mobile communication terminal 10.

Whereby, the mobile communication terminal 10 and the mobile communication network 300 can transmit/receive short messages to/from one another (X3).

When the packet session is established, the agent information unit 4c of the mobile communication terminal 10 transmits a short message addressed to the mobile communication terminal 50 containing the terminal identification information SNa on the mobile communication terminal 10, the IP address "IPsa" of the home agent 1 and a common key "KeyA" for encrypting communication data (X4). The short message may further contain the assigned IP address IPa.

The mobile communication network having received the short message transmits a session establish request signal to the mobile communication terminal 50 to establish a session (X5). When the session is established, the mobile communication network 300 transmits (transfers) the short message to the mobile communication terminal 50 (X6).

The agent information unit 4c of the mobile communication terminal 50 receives the short message through the mobile communication antenna unit 10f, the mobile communication radio unit 10g and the mobile communication connection processing unit 4h, and stores "SNa," "IPsa" and "KeyA." The agent information unit 4c controls the mobile communication connection processing unit 4h so as to transmit a short message containing the terminal identification information SNb on its own terminal and the IP address "IPsb" of the home agent 41. This short message is transmitted to the mobile communication terminal 10 over the mobile communication network 300. The short message may further contain the IP address "IPb" assigned to the mobile communication terminal 50. Additionally, the packet session established at X3 and X5 may be disconnected immediately after the short messages are transmitted.

The mobile communication terminal 10 receives the short message through the fifth transmitting/receiving unit 14. The agent information unit 4c extracts "SNb" and "IPsb" contained in the short message received from the mobile communication terminal 50, and stores them.

Whereby, the mobile communication terminals 10 and 50 can obtain the IP addresses of the home agents 41 and 1 which are communication destinations to each other.

Following the above, the agent synchronization processing unit 4e of the mobile communication terminal 10 (50) applies for synchronization registration to the home agent 1 (41) at X8a (X8b). Namely, the agent synchronization processing unit 4e fills the terminal identification information "SNb (Sna)" on its own terminal, the IP address "IPsb (IPsa)" of the home agent 41 (1) and the session type "IP" into the data part. The agent synchronization processing unit 4e then controls the TCP/IP processing unit 4f so as to generate an IP packet (a synchronization registration request message) having the IP address "IPsa (IPsb)" of the home agent 1 (41) as the destination and the IP address "IPa (IPb)" of its own terminal as the source in the IP header.

Each of the TCP/IP processing units 4f transmits a synchronization registration request signal to the home agent 1 or 41 via the radio adapter 10b or 50b (X8a, X8b).

When each of the home agents 1 and 41 receives the synchronization registration request message, the agent synchronization processing unit 3e prepares the session management table 17c.

Namely, the home agent 1 stores the session number "1," the session type "IP," the requester IP address "IPa," the status information "use" and the destination home agent IP address "IPsb" in the table of the terminal identification information SNa.

Similarly, the home agent 41 stores the session number "1," the session type "IP," the requester IP address "IPb," the status information "use" and the destination home agent IP address "IPsa."

The home agent 1 and the home agent 41 shown in FIG. 14 authenticate the mobile communication terminals 10 and 50 using the hash algorithm, respectively (steps X9a and X9b). Data to be transmitted from the mobile communication terminal 10 to the mobile communication terminal 50 is beforehand encrypted with the common key "KeyA" by the encryption processing unit 4a.

The message synchronization processing unit 3a of the home agent 1 communicates according to the SyncML synchronization registration sequence shown in FIG. 12 in order to initiate a SyncML communication with the home agent 41 (step X9c shown in FIG. 14), and initiates a SyncML communication shown in FIG. 13 when the synchronization registration is completed (steps X10a, X10b and X10c).

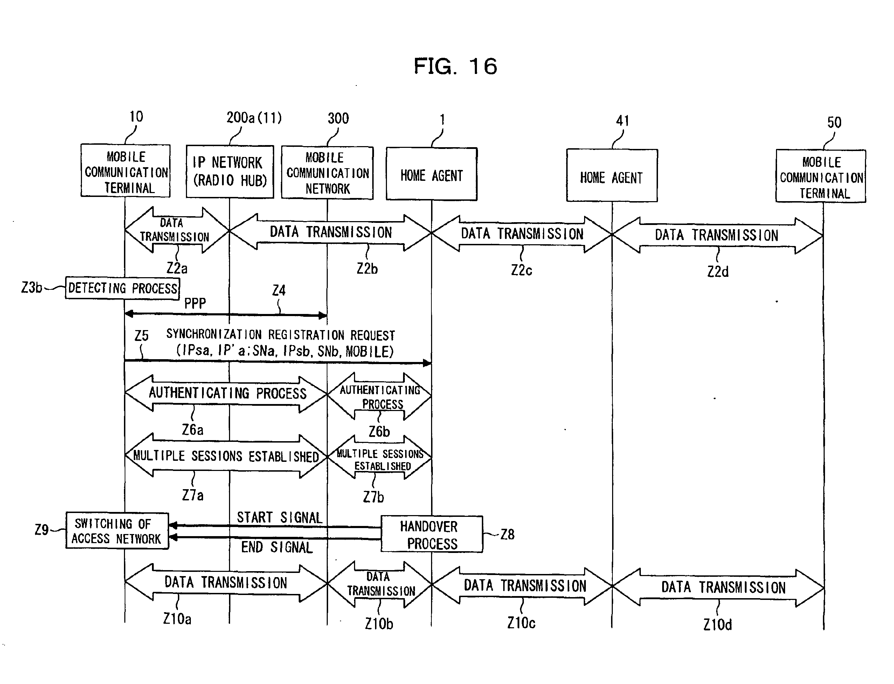

Next, description will be made of a flow of handover of the mobile communication terminal 10 from the IP network 200a to the mobile communication network 300, with reference to FIG. 16.

FIG. 16 is a diagram showing a sequence for illustrating a switching process from a first session to a second session. Namely, FIG. 16 shows a sequence in which the first session in which the mobile communication terminal 10 communicates with the mobile communication terminal 40 via the radio hub 11 is switched to the second session over the mobile communication network 300, to continue the communication.

The mobile communication terminal 10 carries out a TCP/IP communication in the first session with the mobile communication terminal 50 via the radio hub 11, and the home agents 1 and 41 (Z2a to Z2d).

At step Z3b, when the mobile communication terminal 10 detects that the mobile communication terminal 10 approaches a border of a communicable area with the radio hub 11 (for example, the mobile communication terminal detects that the quality of received signal drops below L2), or that the user operates the mobile communication terminal 10 in order to add a session, the IP address managing unit 4g of the mobile communication terminal 10 instructs the mobile communication connection processing unit 4h to dial-up to be connected to the access server 310a of the mobile communication network 300 and transmit an IP address assign request message for requesting for assignment of an IP address.

The mobile communication connection processing unit 4h controls the fifth transmitting/receiving unit 14 to dial-up in a procedure according to PPP, and transmits the IP address assign request message by an RF signal to the base station 300a. The IP address assign request message is transmitted to the access server 310a via the base station 300a and the exchanger 300b.

The PPP connecting unit 310d of the access server 310a has an IP address management table (not shown) similar in structure to the IP address management table 12d. The PPP connecting unit 310d selects an IP address "IP'a" to be assigned to the mobile communication terminal 10, stores the assigned IP address in the IP address management table, and transmits the assigned IP address to the mobile communication terminal 10 (Z4).

The IP address managing unit 4g of the mobile communication terminal 10 obtains the assigned IP address "IP'a" through the fifth transmitting/receiving unit 14 and retains it. Incidentally, it is preferable that the IP address managing unit 4g retains the session type "mobile," as well.

Through the process at Z4, the mobile communication terminal 10 can obtain an IP address to be used when the mobile communication terminal 10 accesses to the home agent 1 via the base station 300a.

When the mobile communication terminal 10 obtains the new IP address "IP'a," the agent synchronization processing unit 4e controls the TCP/IP processing unit 4f to generate an IP packet for a synchronization registration request message using "IP'a" and transmit the generated IP packet to the mobile communication connection processing unit 4h via the base station 300a from the fifth transmitting/receiving unit 14 (Z5).

Preferably, the synchronization registration request message is an IP packet having an IP address "IPsa" of the home agent 1 as the destination, and an IP address "IP'a" of its own terminal for the second session as the source, and containing the terminal identification information "SNa" on the mobile communication terminal 10, the IP address "IPsb" of the destination home agent 41, the identification information "SNb" on the communication destination terminal 50 and the session type "mobile" in the data part. As the information such as "IPsb," "SNb" and the like, addresses retained in the agent information unit 4c may be read out and used. AS "IP'a," an address retained in the IP address managing unit 4g may be read out and used.

When receiving the synchronization registration, the agent synchronization processing unit 3e of the home agent 1 registers a new session in the session management table 17c prepared in prior.

In the home agent 1, the session number "2," the session type "mobile," the requester IP address "IP'a," the status information "wait," and the destination home agent IP address "IPsb" are retained in a table for the terminal identification information SNa.

When updating of the IP address management table 17c is completed, the authenticating process is carried out between the mobile communication terminal 10 and the home agent 1 (Z6a and Z6b).

Namely, the authenticating process is carried out on the mobile communication terminal 10 between the agent authentication processing unit 4d of the mobile communication terminal 10 and the agent authentication processing unit 3d of the home agent 1 in a procedure defined in the communication system 100.

When the agent authentication processing unit 3d determines in the authentication that the mobile communication terminal 10 is a terminal that is qualified to get the service provided by the home agent 1, the second session is established (registered) for handover between the mobile communication terminal 10 and the home agent 1 (multiple sessions established) (Z7a and Z7b).

After the multiple sessions are established (registered), the handover processing unit 3b controls the TCP/IP processing unit 3f and the transmitting/receiving unit 1b so as to transmit a handover start signal (mobile communication terminal) to the mobile communication terminal 10 under a condition in which the communication monitoring function detects. This handover start signal is an IP packet.

Preferably, when the handover processing unit 3b transmits an IP packet from the mobile communication network transmitting/receiving unit 1e to the mobile communication terminal 10, the IP packet has the header part containing "IP'a" as the destination IP address and an IP address "IPsa" of its own server as the source IP address, and the data part containing "handover start" as the contents of the message and the session type "mobile" of a session to be handed over.

When the IP packet is transmitted to the mobile communication terminal 10 from the intra-network transmitting/receiving unit 1f, the IP packet contains the same contents, but has the destination IP address "IPa." Incidentally, the IP addresses "IPa" and "IP'a" are read out from the session management table 17c and used.

The handover processing unit 4b of the mobile communication terminal 10 having received the handover start signal detects the message contents "handover start" contained in the data part, stops transmission of IP packets to be transmitted to the home agent 1, obtains an IP address "IP'a" to be used in the session type "mobile" designated in the handover start signal from the IP address managing unit 4g, and sets the TCP/IP processing unit 4f so as to use the IP address "IP'a" as the source IP address of IP packets to be transmitted to the home agent 1 after this.

The handover processing unit 3b of the home agent 1 having transmitted the handover start signal stops SyncML communication, assigns a new pair of the transmitting buffer (#2) and the receiving buffer (#1) to the mobile communication terminal 10 as shown in FIG. 10, retains IP packets received from the mobile communication terminal 10 through the mobile communication network transmitting/receiving unit 1e in the new transmitting buffer (#2), and retains IP packets received from the mobile communication terminal 50 through the intra-network receiving unit 1g in the new receiving buffer (#2) after this. A new SyncML table 17a for "SNa" is newly prepared in order to manage the new pair of buffers.

When the preparation of the SyncML table 17a is completed, the handover processing unit 3b transmits a handover complete signal to the mobile communication terminal 10. In this handover complete signal, the message contents "handover start" contained in the data portion of the handover start signal are changed to "handover end."

The handover processing unit 4b of the mobile communication terminal 1 having received the handover end signal detects the message contents "handover end," and starts to transmit and receive IP packets containing user data in a session for handover (a session with the home server 1 over the mobile communication network 300). Where, the destination IP address is the IP address "IPsa" of the home agent 1, whereas the source IP address is "IP'a" set.

When the message synchronization processing unit 3a of the home agent 1 refers to the SyncML table 17a for the terminal identification information "SNa" and detects that an IP packet not yet transmitted is retained in the transmitting buffer (#1) used when the first session is used, the message synchronization processing unit 3a preferentially transmits the IP packet (s) retained in, not the new transmitting buffer (#2) but the old transmitting buffer (#1), to the home agent 41 in the SyncML communication. When referring to the SyncML table 17a and detecting that an IP packet not yet transmitted is not retained in the transmitting buffer (#1) used when the first session is used, the message synchronization processing unit 3a controls to transmit an IP packet retained in the new transmitting buffer (#2) to the home agent 41.

Meanwhile, the procedure of SyncML communication is according to the process shown in FIG. 13.

Note that the destination IP address of user data to be transmitted from the mobile communication terminal 10 to the home agent 1 when the first session is used is "IPsa," and the source IP address is "IPa," whereas the destination IP address of user data to be transmitted from the mobile communication terminal 10 to the home agent 1 after the handover is changed to "IPsa," and the source IP address is changed to "IP' a."

Before and after the handover, the destination IP address of an IP packet containing user data to be transmitted from the mobile communication terminal 50 is "IPsb" and the source IP address is "IPb," so that the IP addresses remains unchanged. Before and after the handover, the destination IP address of an IP packet to be transmitted from the home agent 41 to the home agent 1 in the SyncML communication is "IPsa" and the source IP address is "IPsb," so that the IP addresses remain unchanged, as well. Accordingly, the mobile communication terminal 50 and the home agent 41 do not need to particularly recognize presence/absence of the handover processing on the mobile communication terminal 10, and the mobile communication terminal 10 does not need to notify the mobile communication terminal 50 of "IP'a."

When the home agent 1 transmits an IP packet received from the home agent 41 to the mobile communication terminal 10, the destination IP address is "IPa" before the handover, whereas the destination IP address is changed to "IP'a" after the handover.

As above, the mobile communication terminal 10 can continue the TCP/IP communication with the mobile communication terminal 50, by using the first session before the handover and the second session after the handover. Since the home agent 1, the IP address of which is not changed before and after the handover, repeats IP packets before and after the handover, the home agent 41 and the mobile communication terminal 50 do not need to be aware of a change in IP address of the mobile communication terminal 10 with a change in session. In other words,

a section in which the IP address in the header portion of the IP packet differs between before and after the handover is only between the mobile communication terminal 10 and the home agent 1, so that it is unnecessary to change the IP address in the header part of the IP packet communicated between the home agent 1 and another server or terminal.

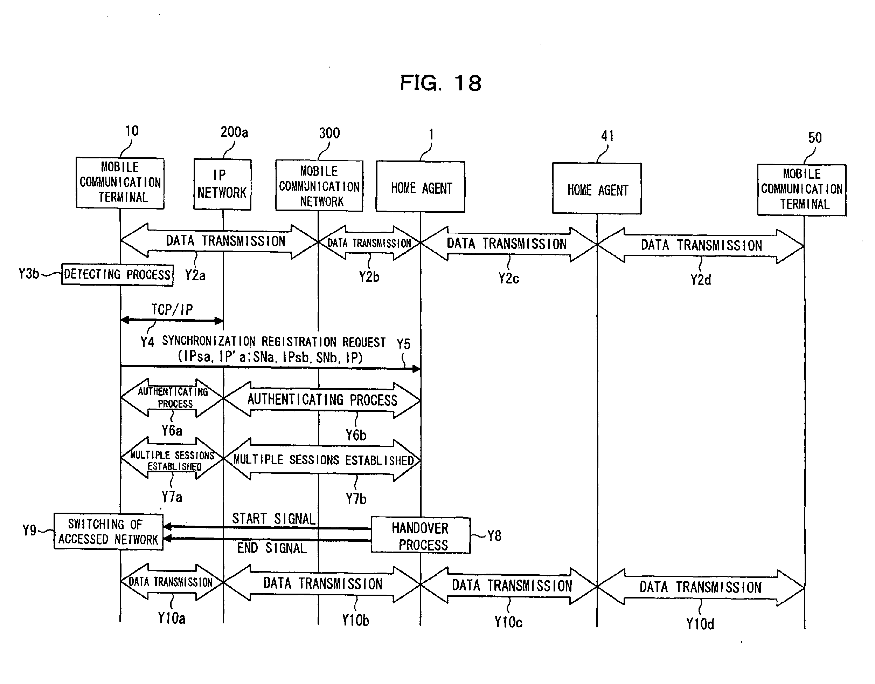

(2) Next, detailed description will be made of handover from the mobile communication network to the IP network according to the first embodiment of this invention with reference to FIGS. 17 and 18.

FIG. 17 is a diagram for illustrating a sequence in which the mobile communication terminal 10 communicates with a communication destination terminal over the mobile communication network 300. FIG. 17 shows a sequence from the time the mobile communication terminal 10 accesses to the mobile communication network 300 (the access server 310a) and to the time the mobile communication terminal 10 starts to communicate with the mobile communication terminal 50 via the home agents 1 and 41 over the mobile communication network 300.

First, a process denoted by X30 in FIG. 17 will be described. X30 is a process of obtaining an IP address to be used when the mobile communication terminal 10 communicates with the home server 1 or the like over the mobile communication network 300 by TCP/IP.

In the process at X30, the IP address managing unit 4g of the mobile communication terminal 10 instructs the mobile communication connection . processing unit 4h to dial-up-connect to the access server 310a of the mobile communication network 300 and transmit an IP address assign request message for requesting for assignment of an IP address. The mobile communication connection processing unit 4h controls the fifth transmitting/receiving unit 14 to dial up in a procedure according to PPP and transmit the IP address assign request message by an RF signal to the base station 300a.

The IP address assign request message is transmitted to the access server 310a via the base station 300d and the exchanger 300b. The PPP connecting unit 310d of the access server 310a has an IP address management table similar in structure to the IP address management table of the IP address management table 12d. The PPP connecting unit 310d selects an IP address "IPa" to be assigned to the mobile communication terminal 10, retains the assigned IP address in the IP address management table, and transmits the assigned IP address to the mobile communication terminal 10 (X30).

The IP address managing unit 4g of the mobile communication terminal 10 obtains the assigned IP address "IPa" through the fifth transmitting/receiving unit 14 and retains it. Preferably, the IP address managing unit 4g retains the session type "mobile," as well.

Through the process at X30, the mobile communication terminal 10 obtains an IP address to access to the home agent 1 via the base station 300a.

The mobile communication connection processing unit 4h of the mobile communication terminal 10 assigned the IP address transmits a request signal for establishing another session (for transmitting/receiving short messages) to the mobile communication network 300 under a control of the agent information unit 4c. The mobile communication network 300 having received the request signal transmits a session establish response signal to the mobile communication terminal 10.

Whereby, the mobile communication terminal 10 and the mobile communication network 300 can transmit and receive short messages to/from each other (X31).

When the session is established, the agent information unit 4c of the mobile communication terminal 10 transmits a short message addressed to the mobile communication terminal 50 containing the terminal identification information "SNa" on the mobile communication terminal 10, an IP address "IPsa" of the home agent 1 and a common key "KeyA" for encrypting communication data (X32). The short message may further contain the assigned "IPa." The mobile communication network 300 having received the short message transmits a session establish request signal to the mobile communication terminal 50. When the session is established (X33), the mobile communication network 300 transmits a short message to the mobile communication terminal 50 (X34).

The agent information unit 4c of the mobile communication terminal 50 receives the short message through the mobile radio antenna unit 10f, the mobile communication radio unit 10g and the mobile communication connection processing unit 4h (X34), and retains "SNa," "IPsa" and "KeyA" contained in the message.

According to the first embodiment, the mobile communication terminal 50 is not yet assigned an IP address by either the repeating server 52 of the IP network 200b or the access server 310b of the mobile communication network 300. For this, the IP address managing unit 4g of the mobile communication terminal 50 connects to the access server 310b of the mobile communication network 300 by PPP at step X35 like step X30 with reception of the above short message as an opportunity, and obtains an IP address "IPb."

When the IP address managing unit 4g obtains the IP address "IPb," the agent information unit 4c controls the mobile communication connection processing unit 4h to transmits a short message containing the terminal identification information "SNb" on its own terminal and the IP address "IPsb" of the home agent 41. The short message is transmitted to the mobile communication terminal 10 (X36).

The mobile communication terminal 10 receives the short message through the fifth transmitting/receiving unit 14. The agent information unit 4 extracts "SNb" and "IPsb" contained in the received short message, and retains them.

Preferably, the packet sessions established at X31b and X33 are disconnected initiatively by the mobile communication network 300 or the mobile communication terminals 10 and 50 after the short messages are transmitted at step X36.

As above, the mobile communication terminals 10 and 50 both obtain the IP addresses of the destination home agents 41 and 1, respectively. Incidentally, step X35 may be after step X36 so long as step X35 is before step X37b to be described later.

The agent synchronization processing unit 4e of the mobile communication terminal 10 controls the TCP/IP processing unit 4f to generate an IP packet for a synchronization registration request message having the IP address "IPsa" as the destination address and the IP address obtained in prior as the source IP address. The agent synchronization processing unit 4e controls the mobile communication connection processing unit 4h so as to convert the generated IP packet into a packet for mobile communication network and transmit it. The mobile communication connection processing unit 4h control the fifth transmitting/receiving unit 14 to transmit the IP packet to the home agent 1 via the base station 300a (X37a). Preferably, the synchronization registration request message is an IP packet containing the identification information "SNa" on the mobile communication terminal 10, the destination home agent IP address "IPsb," the identification information "SNb" on the communication destination terminal 50 and the session type "mobile" in the data portion.

The access server 310a receives the synchronization registration request message through the TCP/IP processing unit 310e. The data converting unit 310c converts the synchronization registration request message from the packet for mobile communication network to an IP packet according to TCP/IP protocol, and transmits it to the gateway 13.

The gateway 13 determines on the basis of the header information that the received IP packet is addressed to the home agent 1, and transmits the IP packet to the home agent 1 of the IP network 200a. When receiving the synchronization registration request message, the agent synchronization processing unit 3e of the home agent 1 prepares the session management table 17c, and registers it as the first session.

In other words, the agent synchronization processing unit 3e stores the session number "1," the session type "moble," the requester IP address "IPa," the status information "use" and the destination home agent IP address "IPsb" in the session management table 17c for the terminal identification information "SNa."

Similarly, the mobile communication terminal 50 transmits a synchronization registration request message to the home agent 41 over the mobile communication network 300 (X37b). The home agent 41 prepares the session management table 17c. Namely, the session number "1," the session type "mobile," the requester IP address "IPb," the status information "use," and the destination home agent IP address "IPsa" are stored in the session management table 17c for the terminal identification information "SNb."

When the preparation of the IP address management table 17c is completed, the authenticating process is carried out between the mobile communication terminal 10 and the home agent 1 over the mobile communication network 300 (X38a).

Similarly, the authenticating process is carried out between the mobile communication terminal 50 and the home agent 1 (X38b). When the agent authentication processing unit 3d determines through the authentication that the mobile communication terminals 10 and 50 are terminals that are qualified to get the service provided by the home agents 1 and 41, respectively, the SyncML synchronization registering process (X39) shown in FIG. 12 is carried out between the home agents 1 and 41.

When the synchronization registering process is completed, data transmission is initiated between the home agent 1 and the home agent 41 (X40a, X40b and X40c). Namely, the mobile communication terminal 10 encrypts user data by means of the encryption processing unit 4a, fills the user data into an IP packet by means of the TCP/IP processing unit 4f (the destination address: "IPbb," and the source address: "IPa"), converts it into a packet for mobile communication network by means of the mobile communication connection processing unit 4h, and transmits an RF signal containing this IP packet from the fifth transmitting/receiving unit 14.

The transmitted RF signal is received by the base station 300a. The packet for mobile communication network is undergone the routing process by the exchanger 300b, and transmitted to the access server 310a. The access server 310a converts the packet for mobile communication network into an IP packet like the above synchronization registration request message, and transmits it to the gateway 13. The gateway 13 transfers the received IP packet to the home agent 1, and the home agent 1 receives the IP packet.

The TCP/IP processing unit 3f analyzes the received IP packet to determine whether or not the IP packet is addressed to the home agent 1. When the IP packet is addressed to the home agent 1 and the source is "IPa, " the IP packet is retained in a transmitting buffer (#1, here) by referring to the session management table 17c under a control of the message synchronization processing unit 3a, like the above.

Similarly, an IP packet is transmitted between the mobile communication terminal 50 and the home agent 41, and the IP packet is retained in a transmitting buffer of the home agent 41. Each of the IP packets retained in the home agent 1 or 41 is retained in a receiving buffer of the destination home agent according to the SyncML communication described above (the destination IP address being converted into an IP address of the destination home agent 1).

The IP packets retained in each of the receiving buffers are transmitted in order to the mobile communication terminal 10 or 50 over the mobile communication network 300 with the requester IP address read out from the session management table 17c by the application processing unit 1a as the destination IP address.

The above is data transmission using the first session over the mobile communication network 300 denoted by X40a, X40b and X40c.

Next, description will be made of a flow of handover of the mobile communication terminal 10 from the mobile communication network 300 to the IP network 200a with reference to FIG. 18.

FIG. 18 is a diagram showing a sequence of handover from the mobile communication network to the IP network according to the first embodiment of this invention. FIG. 18 shows a sequence in which, while the mobile communication terminal 10 communicates with the mobile communication terminal 50 in the first session (a session over the mobile communication network 300) established in prior, the mobile communication terminal 10 switches the first session to the second session over the IP network 200a (a direct access via the radio hub 11 and the like, not over the mobile communication network 300 but over the IP network), and continues the communication.

The mobile communication terminal 10 communicates in the first session (Y2a to Y2d).

When the mobile communication terminal 10 detects that the mobile communication terminal 10 enters into a communicable area with the radio hub 11 (Y3b), or that the user of the mobile communication terminal 10 operates the mobile communication terminal 10 to add a session (Y3b), the mobile communication terminal 10 carries out a process at Y4. Namely, under a control of the terminal application processing unit 10c, the Bluetooth processing unit 10b controls the Bluetooth radio unit 10h to communicate by radio with the radio hub 11 using the Bluetooth antenna unit 10i, and establish a session in a local radio section.

The following is an example of the technique of detecting that the mobile communication terminal 10 enters into a communicable area with the radio hub 11. Namely, the radio hub 11 periodically transmits signals and the radio adapter 50b receives the signals periodically transmitted from the radio hub 11, or recognizes a specific message contained in the received signal, thereby detecting that the mobile communication terminal 10 enters into the communicable area with the radio hub 11.

The IP address managing unit 4g of the mobile communication terminal 10 controls the TCP/IP processing unit 4f so as to generate an IP packet addressed to an IP address "IPtsa" of the repeating server 12 and having a temporary address as the source This IP packet contains the terminal identification information "SNa" on the mobile communication terminal 10 and data indicating an assign request in the data part, which is also referred as an IP address assign request message.

The IP packet generated by the TCP/IP processing unit 4f is transmitted to the radio hub 11 through the Bluetooth processing unit 10b, the Bluetooth radio unit 10h and the Bluetooth antenna unit 10i in the similar manner.

When receiving the IP packet, the radio hub 11 transmits the IP packet to the repeating server 12. When the transmitting/receiving unit 12a of the repeating server 12 receives the IP address assign request message, the TCP/IP processing unit 12b recognizes that the IP packet is addressed to its own server (the destination being "IPtsa"), and inputs the IP address assign request message to the repeating server application processing unit 12c. The repeating server application processing unit 12c selects an IP address that can be assigned, and retains an IP address selected (assigned) correspondingly to "SNa" in the IP address management table 12d ("IP' a," here). The repeating server application processing unit 12c controls the TCP/IP processing unit 12b and the transmitting/receiving unit 12a to transmit an IP packet addressed to the temporary address containing the selected IP address in the data part to the mobile communication terminal 10 via the radio hub 11.

When receiving the IP packet, the radio hub 11 transmits an RF signal to the mobile communication terminal 10 according to Bluetooth protocol. The radio adapter 10b of the mobile communication terminal 10 receives the RF signal, and inputs it to the TCP/IP processing unit 4f. The TCP/IP processing unit 4f recognizes that the signal is an IP packet addressed to its own terminal (the temporary address), and inputs the assigned IP address "IP' a" contained in the IP packet to the IP address managing unit 4g. The IP address managing unit 4g retains the assigned IP address "IP'a."

The mobile communication terminal 10 accesses to the home agent 1 via the radio hub 11 using the assigned IP address, and gets into a TCP/IP communicable status. The above process corresponds to Y4 shown in FIG. 18.

The agent synchronization processing unit 41 of the mobile communication terminal 10 assigned the IP address "IP'a" transmits a synchronization registration request message to the home agent 1 (Y6a and Y6b). Namely, the agent synchronization processing unit 4e controls the TCP/IP processing unit 4f so as to generate an IP packet (a synchronization registration request message) containing the terminal identification information "SNa" on its own terminal, the IP address "IPsb" of the home agent 4a to which the communication destination terminal has applied for the synchronization registration, the terminal identification information "SNb" on the communication destination terminal and the session type "IP" in the data part, and the IP address "IPsa" of the home agent 1 as the destination and the newly assigned IP address "IP'a" as the source in the IP header.

The TCP/IP processing unit 4f transmits the synchronization registration request message to the home agent through the radio adapter 10b (Y5).

The agent synchronization processing unit 3e of the home agent having received the synchronization registration request message updates the session management table 17c. Namely, the anent synchronization processing unit 3e newly stores the session number "2," the session type "IP," the requester IP address "IP'a," the status information "wait," and the destination home agent IP address "IPsb" (below the column of the session number 1) in the table for the terminal identification information "SNa."

When the updating of the IP address management table 17c is completed, the authenticating process is then carried out between the mobile communication terminal 10 and the home agent 1, using a session with the home agent 1 of the IP network 200 established not over the mobile communication network 300 via the radio hub 11 and the like (Y6a and Y6b).

Namely, the authenticating process on the mobile communication terminal 10 is carried out between the agent authentication processing unit 4d of the mobile communication terminal 10 and the agent authentication processing unit 3d of the home agent 1 in a predetermined procedure.

When the agent authentication processing unit 3e determines through this authenticating process that the mobile communication terminal 10 is a terminal that is qualified to get the service provided by the home agent 1, a session for handover is established (registered) between the mobile communication terminal 10 and the home agent 1 (multiple sessions established) (Z7a and Z7b).

The handover processing unit 3b controls the TCP/IP processing unit 3f and the transmitting/receiving unit 1b so as to transmit a handover start message (an IP packet) to the mobile communication terminal 10 after the multiple sessions are established, or provided that the communication monitoring function detects as stated above. Namely, it is preferable that when the handover processing unit 3b transmits the IP packet to the mobile communication terminal 10 through the mobile communication network transmitting/receiving unit 1e, the IP packet contains "IPa" as the destination IP address and "IP' a" as the destination address when the handover processing unit 3b transmits the IP packet to the mobile communication terminal 10 through the intra-network transmitting/receiving unit 1f. In either case, the IP packet contains the IP address "IPsa" of its own server as the source IP address in the header part, along with the message contents "handover start," the session type "IP" of the handed-over network in the data part. Incidentally, the IP addresses "IPa" and "IP'a" can be read out from the session management table 17c and used.

When receiving the handover start signal, the handover processing unit 4b stops transmission of IP packet to be transmitted to the home agent 1 of the mobile communication terminal 10. The handover processing unit 4b obtains an IP address "IP' a" to be used for the session type "IP" designated in the handover start signal from the IP address managing unit 4g, and sets it to the TCP/IP processing unit 4f. The IP address "IP' a" is used as the source IP address of IP packets to be transmitted to the home agent 1.

On the other hand, the handover processing unit 3b of the home agent 1 having transmitted the handover start signal stops the SyncML communication, assigns a new pair of transmitting buffer (#2) and receiving buffer (#2) to the mobile communication terminal 10, and stores an IP packet received from the mobile communication terminal 10 through the mobile communication network transmitting/receiving unit 1f in the new transmitting buffer (#2) and an IP packet received from the mobile communication terminal 50 through the intra-network transmitting/receiving unit 1g in the new receiving buffer (#2) from this time on. The SyncML table 17a is newly prepared in order to manage the new pair of buffers.

The handover processing unit 3b transmits a handover end signal to the mobile communication terminal 10 when the preparation of the SyncML table 17a is completed. The message contents "handover start" contained in the data portion of the handover start signal is changed to "handover end" and used as the handover end signal.

When the handover processing unit 4b receives the handover end signal, transmission and reception of IP packets is started in the second session. As the source IP address, the set "IP'a" is used.

The handover processing unit 4b of the mobile communication terminal 10 having received the handover end signal detects the message contents "handover end," and starts to transmit and receive an IP packets containing user data in the session for handover (a session with the home server 1 over the IP network 200a). In the IP packet, the IP address "IPsa" of the home agent 1 is used as the destination IP address, and the set "IP'a" is used as the source IP address.

The message synchronization processing unit 3a of the home agent 1 refers to the SyncML table 17a for the terminal identification information "SNa." When detecting that an IP packet not yet transmitted is still retained in the transmitting buffer (#1) used when the first session is used, the message synchronization processing unit 3a preferentially transmits an IP packet retained in, not the new transmitting buffer (#2) but the old transmitting buffer (#1), to the home agent 41 in SyncML communication.

When referring to the SyncML table 17a and detecting that an IP packet not yet transmitted is not retained in the transmitting buffer (#1) used when the first session is used, the message synchronization processing unit 3a transmits an IP packet retained in the new transmitting buffer (#2) to the home agent 41.

The procedure of the SyncML communication may be according to the process shown in FIG. 13. Note that the destination IP address and the source IP address of the user data transmitted from the mobile communication terminal 10 to the home agent 1 when the first session is used are "IPsa" and "IPa," respectively. After the handover, the destination IP address of the user data transmitted from the mobile communication terminal 10 to the home agent 1 remains to be "IPsa" but the source IP address is changed to "IP'a."

Before the start and after the end of the handover process, the destination IP address of an IP packet containing user data to be transmitted from the mobile communication terminal 50 is "IPsb," and the source IP address is "IPb," both of which remain unchanged. Additionally, the destination IP address of an IP packet to be transmitted from the home agent 41 to the home agent 1 in the SyncML communication is "IPsa" and the source IP address is "IPsb," both of which remain unchained, as well. Accordingly, the mobile communication terminal 50 and the home agent 41 do not need to recognize whether the mobile communication terminal 10 is handed over or not.

When the home agent 1 transmits an IP packet received from the home agent 41 to the mobile communication terminal 10, the destination IP address is "IPa" before the handover, but the destination IP address needs to be changed to "IP'a" after the handover.

As above, the mobile communication terminal 10 uses the first session before handover and the second session after the handover, thereby continuing the TCP/IP communication with the mobile communication terminal 50. Since the home agent 1, the IP address of which remain unchanged before and after the handover, repeats IP packets, the home agent 41 and the mobile communication terminal 50 do not need to be aware of a change in IP address of the mobile communication terminal 10 with a switching of the session.

In other words, since a section in which the IP address in the header part of the IP packet differs between before and after the handover is only a section between the mobile communication terminal 10 and the home agent 1, it is unnecessary to change the IP address in the header part of the IP packet to be communicated between the home agent 1 and another server or terminal.

The above is the handover method from the server, the mobile communication terminal and the IP network to the mobile communication network, and the handover method from the mobile communication network to the IP network.

Meanwhile, this embodiment can be modified in various ways.

Now, description will be made of a case where an inquiring function is added to the repeating servers 12 and 52, as a modification. When the repeating servers 12 and 52 relate identification information on the home agents 1 and 41 to IP addresses of the home agents 1 and 41, respectively, each of the mobile communication terminals 10 and 50 can notify of the identification information on the home agent 1 or 41 instead of the IP address by a short message.

In this case, each of the mobile communication terminals 1 and 41 generates a message inquiring for the IP address of the home agent having the identification information on the repeating server 12 or 52, and transmits the message to the repeating server 12 or 52. When receiving the message, each of the repeating servers 12 and 52 transmits an IP address corresponding to the identification information to the mobile communication terminal 1 or 41 having inquired.

Each of the mobile communication terminal 1 and 41 sets a received IP address as the IP address of the home agent of the destination communication terminal in a synchronization registration request message, and transmits the IP packet.

Further, the function of the repeating servers 12 and 52 may be integrated to the function of the home agents 1 and 41.

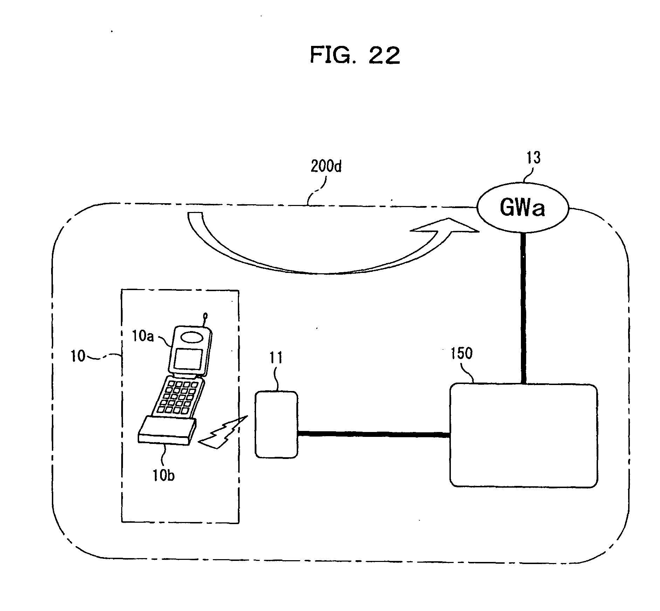

FIG. 22 is a schematic diagram showing the structure of an IP network according to the first embodiment of this invention. An IP network 200d shown in FIG. 22 has is similar in. function to the IP network 200a. The IP network 200d comprises a home agent server (home agent) 150 having a function which is an integration of the function of the home agent 1 and the inquiring function of the repeating server 12. Like reference characters in FIG. 22 designate like or corresponding parts in the drawings, repetitive descriptions of which are thus omitted.

The mobile communication terminal 10 can change the IP address of the home agent 41 in the synchronization registration request message to the home agent to the identification information on the home agent 41, and transmits it. Since the home agent relates an IP address to identification information and retains them, it is possible to prepare a session management table by reading out a relevant IP address.

In this embodiment, there are provided two home agents, the home agent 1 for the transmitting mobile communication terminal 10 and the home agent 41 for the receiving mobile communication terminal 50. However, the home agent may be one. A case where the mobile communication terminal 10 is handed over from the IP network to the mobile communication network with one home agent will be next described briefly.

The mobile communication terminals 10 and 50 obtain IP addresses "IPa" and "IPb," respectively, in the similar manner to X1 and X2 in FIG. 14. Assuming here that the mobile communication terminals 10 and 50 retain an IP address of the home agent, the mobile communication terminal 10 and 50 do not transmit/receive short messages to each other. When the mobile communication terminals 10 and 50 do not retain the IP address, the mobile communication terminals 10 and 50 transmit the short messages to each other, as shown in FIG. 14.

Each of the mobile communication terminals 10 and 50 having obtained the IP address then transmits a synchronization registration request message to one shared home agent. The synchronization registration request messages are IP packets, which may be "IPsa, IPa; SNa, SNb, IP" and "IPsa, IPb; SNb, SNa, IP" as denoted in FIG. 14.

When detecting that a pair of SNa and SNb coincide to each other, the home agent transmits a synchronization registration response signals to the mobile communication terminals 10 and 50, secures the buffers 1 and 2, relates the IP addresses "IPa" and "IPb" to each other, and retains them.

When receiving the synchronization response signal, each of the mobile communication terminals 10 and 50 transmits an IP packet containing user data to the home agent. The home agent retains the received IP packets in the buffers 1 and 2, fills user data in the IP packet from the mobile communication terminal 10 in the data part of an IP packet to be transmitted from its own server as the source addressed to the retained "IPb," while filling user data of the IP packet from the mobile communication terminal 50 in the data part of an IP packet to be transmitted from its own server as the source addressed to the retained "IPa." Here, the detecting process at Z3b shown in FIG. 16 is carried out. When obtaining "IP' a" at Z4, the mobile communication terminal 10 transmits a synchronization registration request message to the home agent. The synchronization registration request message is an IP packet, which may be "IPsa, IP'a; SNa, SNb, mobile."

When receiving the synchronization registration request message, the home agent retains data "IP'a" and "mobile," and transmits a synchronization registration response signal to the mobile communication terminal 10.

After that, when the above communication monitoring function of the home agent detects as described above, the home agent transmits a start signal to the mobile communication terminal 10.

The mobile communication terminal having received the start signal transmits an IP packet to the home agent over the mobile communication network, using the IP address "IP' a." The home agent retains this IP packet in the buffer 1, and transmits the IP packet to the mobile communication terminal 50.

On the other hand, the IP packet from the mobile communication terminal 50 is retained in the buffer 2, and transmitted, addressed to "IP'a."

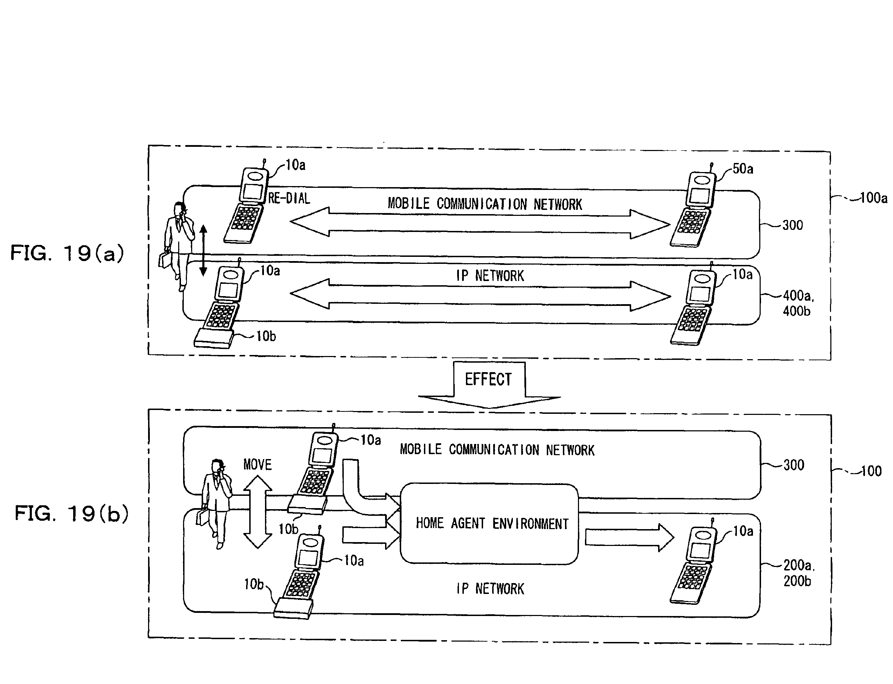

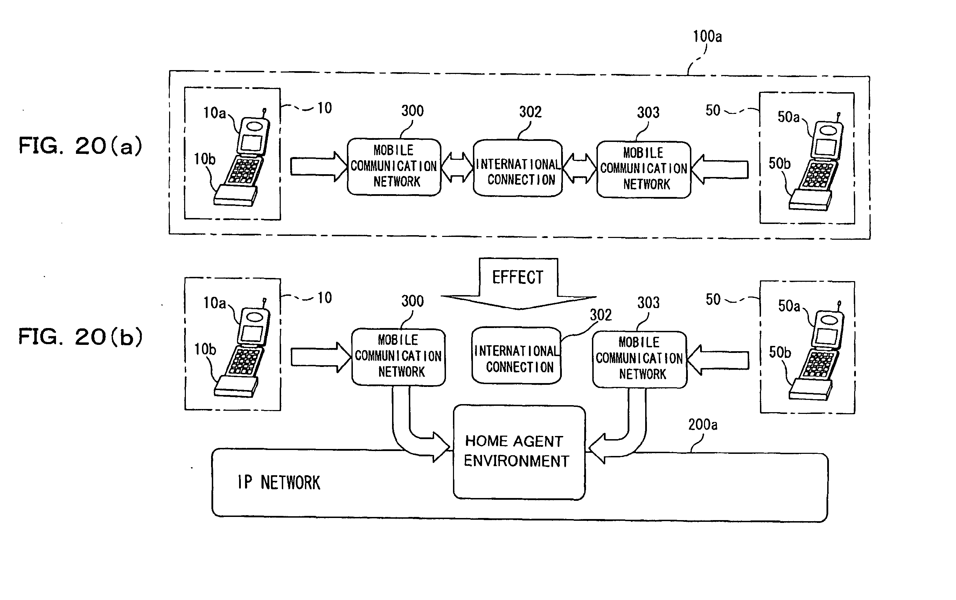

Hereinafter, the effects and merits will be described with reference to FIGS. 19(a), 19(b), 20(a) and 20(b).

FIGS. 19(a) and 19(b) are diagrams for illustrating effects provided when this invention is used. A system (a communication system) 100a shown in FIG. 19(a) is before this invention is applied. In FIG. 19(a), the user A moves to a different kind of network (an IP network 400a) during a data communication over a mobile communication network 300. After moving, the user A needs to once disconnect the data communication, re-dial in environments of another network, and carry out a process from call connection to data communication.

A communication system 100 shown in FIG. 19(b) is applied this invention. Even when the user moves into a different kind of network during a data communication over the mobile communication network 300 or the IP network 200a, seamless handover is possible.

In the communication system 100, the mobile communication terminal 10 in data communication over one IP network 200a to which the mobile communication terminal 10 is first connected can move to the mobile communication network 300, with the communication being continued, or the mobile communication terminal 10 in data communication over the mobile communication network 300 to which the mobile communication terminal 10 is first connected can move to the IP network 200a without disconnecting a session of the data communication.

FIGS. 20(a) and 20(b) are diagrams for illustrating another effect of this invention. When the mobile communication terminal 10 shown in FIG. 20(a) exchanges data with a mobile communication terminal 50 of a user in abroad, resources belonging to the mobile communication network 300, an international connection network 302 and a mobile communication network 303 of the communication destination terminal for the data exchange are used. For this, the user is required an access charge of the international connection network 302, in addition to the use charges of the mobile communication networks 300 and 303.

The communication system 100 shown in FIG. 20(b) is applied this invention. When the mobile communication terminal 10 belonging to the mobile communication network 300 exchanges data with the portable terminal 50a in abroad, the user can switch the session so that the communication is carried out via the closest access server charging a low user cost at any time and exchange data over the IP network 200a even if the user of the mobile communication terminal 10 moves during the communication over the mobile communication network 300 using the portable communication terminal 10.

As above, it is possible to decrease the number of resources of the repeating networks transferring IP packet data so that the delay time of the packet data is shortened when the user accesses to the IP network 200a.

The Data communicating process in the IP network 200a and the data communicating process in the mobile communication network 300 are fused seamlessly, thereby promoting use by the users.

### (A1) Description of First Modification of First Embodiment of the Invention

In the communication system 100 according to the first embodiment, the mobile communication terminal 10 can be connected to the IP network over wires. Incidentally, the communication system (not shown) in a first modification is similar to the communication system 100 unless specifically mentioned. Other than these, like reference characters designate like or corresponding parts in the drawings, repetitive descriptions of which are thus omitted.

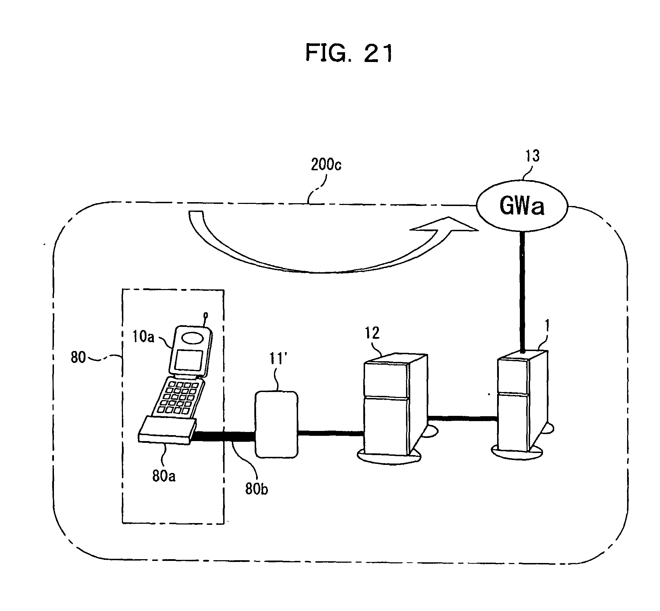

FIG. 21 is a schematic diagram showing a structure of an IP network according to the first modification of the first embodiment of this invention, An IP network 200c shown in FIG. 21 is similar in function to the IP network 200a, whereas a hub (hub apparatus) 11' is connected to a repeating server 12, and a wire line 80b is connected to the hub 11' , via which a mobile communication terminal 80 is provided.

The wire line 80b is a LAN cable. The hub 11' transfers IP packets. The mobile communication terminal 80 has an adapter 80a to establish a communication with the hub 11', along with a cellular phone 10a. Whereby, the mobile communication terminal 80 can transfer data over the wires, instead of by radio.

The mobile communication terminal 10 has an IP protocol processing function as a terminal which belongs to a radio LAN and has a communicating function with a radio hub 11, along with a mobile communication protocol processing function as a cellular phone.

With the above structure, the mobile communication terminal 10a carries out a data communication with the hub 11', whereby the user can access from the IP network 200c to the IP network 200b.

As above, a communication system can be configured with existing installations.

### (B) Description of Second Embodiment of the Invention

In each of the first embodiment and the first modification of the first embodiment, the home agents 1 (150) and 41 are provided in the IP networks 200a and 200b, respectively. However, the home agents 1 (150) and 41 may be provided outside the IP networks 200a and 200b, respectively.

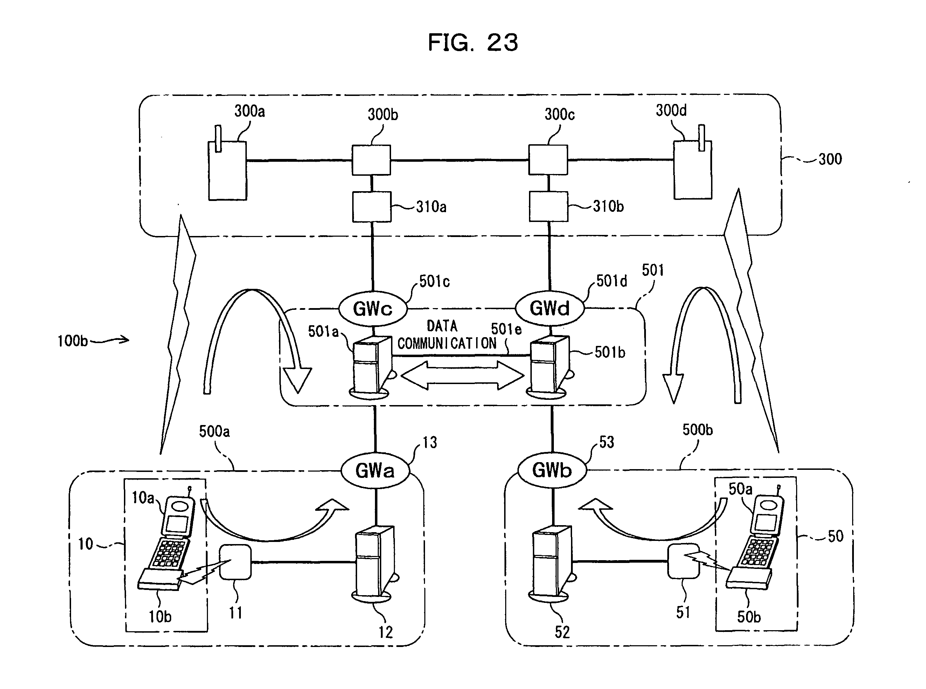

FIG. 23 is a diagram showing a structure of a communication system 100b according to a second embodiment of this invention. A communication system 100b shown in FIG. 23 is a system which can fuse the mobile communication network and the IP network to communicate with each other. The communication system 100b comprises mobile communication terminals 10 and 50, a mobile communication network 300, an IP network (service provider) 501, and IP networks 500a and 500b.

The communication system 100b shown in FIG. 23 differs from the communication system 100 in that the home agents 501a and 501b are provided in the IP network 501, not in the IP networks 200a and 200b. In other words, the two home agents 501a and 501b carrying out the SyncML communication are provided independently of the IP networks 500a and 500b.

The service provider 501 is an enterprise or the like providing a chargeable connection service to the IP network to users. The service provider 501 comprises a home agent (first server) 501a, a home agent (second server) 501b, and gateway servers 501c (GWc) and 501d (GWd).

The IP network 500a is connected to the home agent 501a which can communicate with the mobile communication terminal 10, functioning as a first packet network similar to the IP network 200a. The IP network 500b has the home agent 501b which can transmit and receive data to/from the home agent 501a, functioning as a second packet network. The user can be handed over without being aware of his/her position.

The home agent 501a is a server connected to the IP network 200a. The home agent 501a comprises a mobile communication network transmitting/receiving unit 1e, an intra-network transmitting/receiving unit 1f, an inter-network transmitting/receiving unit 1g and an agent server application processing unit 1a.

The mobile communication network transmitting/receiving unit 1e transmits/receives packets over the mobile communication network 300 to/from the mobile communication terminal 10, which can communicate with both the mobile communication network 300 and the IP network 200a.

The intra-network transmitting/receiving unit 1f transmits/receives a packet containing synchronization data relating to synchronization and user data to/from the mobile communication terminal 10.

The inter-network transmitting/receiving unit 1g transmits/receives data with the home agent 501b connected to an IP network 200b which differs from the mobile communication network 300 and the IP network 200a and can communicate with a communication destination terminal (the mobile communication terminal 50).

The agent server application processing unit 1a is inputted data from the mobile communication network transmitting/receiving unit 1e, the intra-network transmitting/receiving unit 1f and the inter-network transmitting/receiving unit 1g, and outputs the data thereto.

The home agent 501b is similar in structure to the home agent 501a.

The gateway server 501c is provided, for example, on a boundary between the IP network 200a and the mobile communication network 300, and has a function of passing a specific IP packet having a specific IP address between different kinds of networks (the IP network and the mobile communication networks). The gateway server 501d is provided, for example, on a boundary between the IP network 200b and the mobile communication network 300 to pass a specific IP packet having a specific IP address between different kinds of networks.

It is thereby possible to decrease the load and manage the networks efficiently. "On the boundary" signifies "providing in either the IP network 200a or the mobile communication network 300."

Other than the above, like reference characters designate like or corresponding parts or parts having like functions, further descriptions of which are thus omitted.

With the above structure, a process for data communication is carried out just as done in the process described above in the first embodiment.

The second embodiment can be applied to the Internet service to the public, as well.

Even when the home agent is not provided in an IP network (an IP network in an enterprise or the like) as above, it is possible to provide the service by providing the processing unit to the service provider. Namely, even when the home agent is disposed in the service provider, the same effect can be provided.

When the mobile communication terminal 10 is in data communication over the mobile communication network 300 or over the IP network 500a in the communication system 100b, the mobile communication terminal 10 can be seamlessly handed over even when the mobile communication terminal 10 moves into a different kind of network, thus the user can move freely with the data communication being continued.

As above, it is possible to decrease the number of resources of repeating networks transferring IP packet data, and shorten the delay time of packet data when the user accesses to the IP network 500a.

### (C) Others

Note that the above examples are not limited to Bluetooth protocol, but any one of various protocols may be used as the short-distance radio communication protocol.

The mobile communication terminals 10 and 50 may transmit/receive data to/from each other in an information transmitting/receiving system other than SMS.

Each of the above management tables 44, 44a and 44b stores two kinds of IP addresses. However, the management table may store three or more kinds of IP addresses.

### Industrial Applicability

According to this invention, the user can concurrently use a communication system such as a mobile communication system such as IMT-2000 (International Mobile Telecommunications - 2000) or an existing subscriber mobile communication service, and an Internet communication system such as an inter-office system configuring an IP network, an Internet connection system provided by a service provider or a system provided by a value added service provider. Data communication over the IP network and data communication over the mobile communication network are seamlessly fused, whereby the user can be handed over without a disconnection of the communication during the communication using one mobile communication terminal.

## Claims

1. A server disposed in a packet network to repeat a packet between a first terminal and a second terminal comprising:
a session managing unit storing a first address of said first terminal assigned to a first session representing a connection status between said server of its own and said terminal and a second address of said first terminal assigned to a second session representing a connection status between said server of its own and said first terminal;
a. receiving unit receiving a packet containing user data from said second terminal;
a switching unit switching from said first session of a packet having said first address as a destination and containing said user data to said second session of a packet having said second address as the destination and containing said user data on the basis of said addresses stored in said session managing unit; and
a transmitting unit transmitting said packet using said second session switched by said switching unit.

2. A server disposed in a packet network to repeat a packet between a first terminal and a second terminal comprising:
a session managing unit storing a first address of said first terminal assigned to a first session representing a connection status between said server of its own and said first terminal and a second address of said first terminal assigned to a second session representing a connection status between said server of its own and said first terminal;
a receiving unit receiving a packet having said first address or said second address as a source address and containing user data from said first terminal in said first session or said second session; and
a transmitting unit transmitting a packet containing said user data in said received packet and having an address of said server of its own as the source address to said second terminal in both said first session and said second session.

3. The server according to claim 1, wherein said first address is either an address assigned by a mobile communication network or an address assigned by said IP network, and said second address is the other address.

4. The server according to claim 2, wherein said first address is either an address assigned by a mobile communication network or an address assigned by said IP network, and said second address is the other address.

5. The server according to claim 1, wherein said first session is either a session in which said first terminal communicates with said IP network over a mobile communication network or a session in which said first terminal directly accesses to said IP network to communicate with the same, and said second session is the other session.

6. The server according to claim 1, wherein said switching unit monitors a quality of a radio signal transmitted from said first terminal in said first session, and switches said first session or said second session on the basis of predetermined detection.

7. A mobile communication terminal accessing to a mobile communication network connected to a packet network to be able to carry out a packet communication with a server in said packet network comprising:
an access obtaining unit directly accessing to said packet network, not over said mobile communication network, to obtain an access for a packet communication;
a control unit controlling said address obtaining unit to obtain an address when a predetermined operation is performed on said mobile communication terminal or it is detected that a direct access to said packet network becomes possible during the packet communication with said server; and
a switching unit switching the packet communication with said server to a packet communication by a direct access to said packet network using the address obtained by said address obtaining unit.

8. A mobile communication terminal directly accessing to a packet network connected to a mobile communication terminal, not over said mobile communication network, to be able to carry out a packet communication with a server in said packet network comprising:
an address obtaining unit directly accessing to said mobile communication network to obtain an address for a packet communication;
a control unit controlling said address obtaining unit to obtain an address when a predetermined operation is performed on said mobile communication terminal or it is detected that a direct access to said packet network becomes possible during the packet communication with said server; and
a switching unit switching the packet communication with said server to a packet communication by a direct access to said mobile communication network using the address obtained by said address obtaining unit.

9. The mobile communication terminal according to claim 7, wherein said control unit notifies said server of said obtained address before the switching.

10. The mobile communication terminal according to claim 7, wherein said switching unit switches according to an instruction from said server.

11. The mobile communication terminal according to claim 7, wherein said switching unit stops to transmit a packet for the packet communication with said server according to a first instruction from said server, switches according to a second instruction after said first instruction, and starts to transmit a packet.

12. A radio apparatus disposed in a packet network to carry out a radio communication with a mobile communication terminal comprising:
a measuring means measuring a receive quality in said radio communication; and
a transmitting unit transmitting a received packet from said mobile communication terminal, a measured receive quality or deterioration information generated on the basis of said receive quality to a server in said packet network which is in communication with said mobile communication terminal.

13. A communication method in a communication system comprising a server disposed in a packet network and a mobile communication terminal being able to access to both a mobile communication network connected to said packet network and said packet network, comprising the steps of:
sending a packet to be transmitted when said mobile communication terminal carries out a packet communication with another terminal via said server, and controlling a source address of the packet to said another terminal by said server so that the source address of said packet remains unchanged before and after a switching of the network to which said mobile communication terminal accesses.

14. The communication method in a communication system according to claim 12 further comprising the steps of:
notifying of an address to be used in a network to be switched to from said mobile communication terminal when the network to which said mobile communication terminal accesses is switched; and
switching a destination address of a packet from said another terminal to said notified address by said server when the network to which said mobile communication terminal accesses is switched.

15. A communication method in a communication system comprising:
a first session communication step at which a first terminal communicates with a first server in a packet network over a mobile communication network using a first session representing a connection status between said first terminal and said first server;
a synchronous communication step at which said first server starts a synchronous communication with a second server in said packet network;
a synchronization registration request transmission step at which said first terminal transmits a synchronization registration request using a packet communication set between said first terminal and said first server;
a second session establishment step at which a second session representing a direct connection status between said first server having received said synchronization registration request and said first terminal is established;
a handover step at which said first server having received said synchronization registration request hands over;
a switching step at which said first terminal switches from said mobile communication network to said packet network; and
a communication step at which said first terminal communicates with said second terminal over said switched packet network using said synchronous communication started at said switching step.

16. A communication system comprising:
a packet network;
a mobile communication network connected to said packet network;
a server disposed in said packet network to repeat a packet between a first terminal and a second terminal;
said first terminal transmitting/receiving a packet to/from said server directly or over said mobile communication network;
said server comprising:
a session managing unit storing a first address of said first terminal assigned to a first session representing a connection status between said server of its own and said first terminal and a second address of said first terminal assigned to a second session representing a connection status between said server of its own and said first terminal;
a receiving unit receiving a packet containing user data from said second terminal;
a switching unit switching from said first session of a packet having said first address as the destination and containing said user data to said second session of a packet having said second address as a destination and containing said user data on the basis of said addresses stored in said session managing unit;
a transmitting unit transmitting said packet in said second session switched by said switching unit;
said mobile communication terminal comprising:
a transmitting/receiving unit transmitting/receiving a packet to/from said server in said packet network directly or over said mobile communication network connected to said packet network;
an address obtaining unit obtaining an address for a packet communication from the packet received by said transmitting/receiving unit, generating a packet having said obtained address and directly accessing to said packet network;
an address managing unit storing said address for the packet communication obtained by said address obtaining unit;
a control unit controlling said address obtaining unit to obtain said address for the packet communication when detecting a predetermined operation or a status in which a direct access to said packet network becomes possible during the packet communication with said server over said mobile communication network; and
a switching unit switching from the packet communication with said server over said mobile communication network to a packet communication by a direct access to said server when said control unit detects, and inputting the address for a packet stored in said address managing unit to said address obtaining unit.
